# EUROPÄISCHE PATENTSCHRIFT

(11) **EP 3 669 439 B1**
(45) Veröffentlichungstag und Bekanntmachung des Hinweises auf die Patenterteilung: **07.06.2023**
(21) Anmeldenummer: 18739835.9
(22) Anmeldetag: 09.07.2018
(51) Int. Cl.: H02K 1/27, H02K 15/03, H02K 15/12

(54) **ROTOR FÜR EINE ELEKTRISCHE MASCHINE, INSBESONDERE EINES KRAFTFAHRZEUGS, SOWIE VERFAHREN ZUM HERSTELLEN EINES SOLCHEN ROTORS**
ROTOR FOR AN ELECTRICAL MACHINE, IN PARTICULAR OF A MOTOR VEHICLE, AND METHOD FOR PRODUCING SUCH A ROTOR
ROTOR POUR MOTEUR ÉLECTRIQUE, EN PARTICULIER D'UN VÉHICULE AUTOMOBILE, ET PROCÉDÉ DE FABRICATION DUDIT ROTOR

(30) Priorität: 17.08.2017 DE 102017214309
(43) Veröffentlichungstag der Anmeldung: 24.06.2020
(73) Patentinhaber: Vitesco Technologies GmbH, 93055 Regensburg (DE)
(72) Erfinder: FRÖHLICH, Holger, 13127 Berlin (DE); HEISE, Christoph, 14974 Ludwigsfelde (DE)
(74) Vertreter: Vitesco Technologies
(86) Internationale Anmeldenummer: PCT/EP2018/068514
(87) Internationale Veröffentlichungsnummer: WO 2019/034331

(56) Entgegenhaltungen:
- EP-A2- 2 187 503
- WO-A1-2007/080661
- DE-A1-102009 054 584
- JP-A- 2002 034 187
- JP-A- 2014 036 486

## Beschreibung

Die Erfindung betrifft einen Rotor für eine elektrische Maschine, insbesondere eines Kraftfahrzeugs.

Ferner betrifft die Erfindung ein Verfahren zum Herstellen eines solchen Rotors.

Derartige Rotoren für elektrische Maschinen, insbesondere von Kraftfahrzeugen, sowie Verfahren zum Herstellen von solchen Rotoren sind aus dem allgemeinen Stand der Technik bereits hinlänglich bekannt. Der jeweilige Rotor weist wenigstens ein Blechpaket auf, welches auch als Rotorblechpaket bezeichnet wird. Das Blechpaket weist seinerseits eine Mehrzahl von in axialer Richtung des Rotors und somit des Blechpakets aufeinanderfolgend beziehungsweise hintereinander angeordneten Magnettaschen auf, in welchen jeweilige Magnete aufgenommen sind, die mittels einer ausgehärteten Vergussmasse in den Magnettaschen fixiert sind. Beispielsweise sind die Magnete über die Vergussmasse stoffschlüssig mit dem Blechpaket verbunden, wodurch die Magnete an dem Blechpaket gehalten und dadurch in den Magnettaschen fixiert sind. Insbesondere ist in der jeweiligen Magnettasche wenigstens ein Magnet angeordnet.

Im Rahmen des jeweiligen Verfahrens zum Herstellen eines solchen Rotors wird beispielsweise das Blechpaket bereitgestellt. Ferner werden die Magnete in den jeweiligen Magnettaschen angeordnet. Außerdem wird die Vergussmasse, insbesondere in flüssigem Zustand, in die Magnettaschen eingebracht, wodurch die Magnete mittels der Vergussmasse in den Magnettaschen fixiert werden.

Die DE 10 2009 054 584 A1, die WO 2007 / 080 661 A1 und die JP 2002 034 187 A beschreiben jeweils einen Rotor mit in Umfangsrichtung zueinander beabstandet angeordneten Magnettaschen.

An eine Magnettasche ist ein Steigkanal angeschlossen und mit der Magnettasche fluidtechnisch verbunden. Somit kann ein Vergussmaterial über den Steigkanal in die Magnettasche fließen, um einen darin angeordneten Magneten fixieren.

Aufgabe der vorliegenden Erfindung ist es, einen Rotor und ein Verfahren der eingangs genannten Art zu schaffen, sodass der Rotor auf besonders einfache und somit zeit- und kostengünstige Weise hergestellt werden kann.

Diese Aufgabe wird erfindungsgemäß durch einen Rotor mit den Merkmalen des Patentanspruchs 1 sowie durch ein Verfahren mit den Merkmalen des Patentanspruchs 8 gelöst. Vorteilhafte Ausgestaltungen mit zweckmäßigen Weiterbildungen der Erfindung sind in den übrigen Ansprüchen angegeben.

Ein erster Aspekt der Erfindung betrifft einen Rotor für eine elektrische Maschine, insbesondere eines Kraftfahrzeugs wie beispielsweise eines Kraftwagens. Der Rotor weist wenigstens ein Blechpaket auf, welches auch als Rotorblechpaket bezeichnet wird. Das Blechpaket weist seinerseits eine Mehrzahl von in axialer Richtung des Rotors aufeinanderfolgend beziehungsweise hintereinander angeordneten Magnettaschen auf, in welchen jeweilige Magnete aufgenommen sind. Dies bedeutet beispielsweise, dass in der jeweiligen Magnettasche wenigstens ein Magnet aufgenommen ist. Der jeweilige Magnet kann insbesondere als Permanentmagnet ausgebildet sein, wobei die elektrische Maschine beispielsweise als dynamoelektrische Maschine ausgebildet ist. Dabei sind die Magnete mittels einer ausgehärteten Vergussmasse in den Magnettaschen fixiert. Beispielsweise sind die Magnete über die Vergussmasse stoffschlüssig mit dem Blechpaket verbunden und dadurch in den Magnettaschen fixiert.

Um nun den Rotor auf besonders einfache und somit zeit- und kostengünstige Weise herstellen zu können, ist, insbesondere in dem Blechpaket, ein Verteilersystem vorgesehen beziehungsweise ausgebildet, wobei die Magnettaschen über das Verteilersystem fluidisch miteinander verbunden sind. Das Verteilersystem weist je Magnettasche, die mit dem Verteilersystem fluidisch verbunden ist, wenigstens einen fluidisch mit der jeweiligen Magnettasche verbundenen Füllkanal auf, wobei das Verteilersystem ferner wenigstens einen den Füllkanälen gemeinsamen und fluidisch mit den Füllkanälen verbundenen Verteilerkanal aufweist. Des Weiteren erstreckt sich die ausgehärtete Vergussmasse durchgängig, das heißt unterbrechungsfrei, von Magnettasche zu Magnettasche durch das Verteilersystem. Durch den Einsatz des Verteilersystems ist es möglich, die Vergussmasse in ihrem flüssigen Zustand in das Verteilersystem, insbesondere in den Verteilerkanal und über diesen in das Verteilersystem, einzubringen, indem beispielsweise die zunächst flüssige Vergussmasse in den Verteilerkanal eingefüllt wird. Die flüssige Vergussmasse kann dann den Verteilerkanal durchströmen und von dem Verteilerkanal in die jeweiligen Füllkanäle einströmen und die jeweiligen Füllkanäle durchströmen. Von den Füllkanälen kann die flüssige Vergussmasse schließlich in die jeweiligen Magnettaschen einströmen und dabei beispielsweise die jeweiligen, in den jeweiligen Magnettaschen angeordneten Magnete an- und umströmen.

Danach härtet beispielsweise die Vergussmasse aus, wodurch die Magnete in den Magnettaschen fixiert werden. Die ausgehärtete Vergussmasse befindet sich dabei sowohl in den Magnettaschen als auch in den Füllkanälen und in dem Verteilerkanal, sodass sich beispielsweise die ausgehärtete Vergussmasse ausgehend von einer der Magnettaschen durch das Verteilersystem hindurch durchgängig beziehungsweise unterbrechungsfrei zu den jeweils anderen Magnettaschen erstreckt. In ausgehärtetem Zustand bildet somit die ausgehärtete Vergussmasse beispielsweise ein einstückiges Gerippe, welches auch als Gitter, Klemmstruktur oder Struktur bezeichnet wird. Mittels der Struktur sind die Magnete in den Magnettaschen fixiert. Ferner sorgt die Struktur für eine besonders vorteilhafte Dämpfung, sodass beispielsweise übermäßige Schwingungen und daraus resultierende Geräusche, insbesondere während eines Betriebs der elektrischen Maschine, vermieden werden können.

Die Magnete und die Magnettaschen, welche auch einfach als Taschen bezeichnet werden, weisen beispielsweise jeweils eine vorgebbare Anzahl auf, welche bedarfsgerecht eingestellt werden kann.

Die Erfindung beruht dabei insbesondere auf der folgenden Erkenntnis: Um die beispielsweise als Permanentmagnete ausgebildeten Magnete einfach und zuverlässig in die Magnettaschen einbringen, insbesondere einführen, zu können, sind die als Ausnehmungen ausgebildeten Magnettaschen, insbesondere orthogonal zur axialen Richtung des Rotors beziehungsweise des Blechpakets, größer dimensioniert als die Magnete, sodass sich beispielsweise die in den Magnettaschen aufgenommenen Magnete noch relativ zu dem Blechpaket bewegen können, wenn die Magnete nicht in den Magnettaschen fixiert sind. Das Fixieren der Magnete in den Magnettaschen beziehungsweise an dem Blechpaket erfolgt mittels der Vergussmasse, welche in die jeweiligen Magnettaschen eingebracht, insbesondere eingegossen, wird. Dabei wird die Vergussmasse in jeweilige Zwischenräume beziehungsweise Spalte zwischen den Magneten und dem Blechpaket eingebracht. Das auch als Vergießen bezeichnete Eingießen der Vergussmasse in die Magnettaschen erfolgt üblicherweise manuell mithilfe einer handelsüblichen Spritze, sodass das Eingießen als manueller Verguss durchgeführt wird. Ein solcher manueller Verguss ist jedoch sehr zeit- und somit kostenaufwendig.

Üblicherweise wird zum Eingießen der Vergussmasse in die Magnettaschen beziehungsweise in die Zwischenräume wie folgt vorgegangen: Der Rotor beziehungsweise das Blechpaket wird lotrecht aufgestellt, sodass beispielsweise die axiale Richtung des Blechpakets beziehungsweise des Rotors in vertikaler Richtung verläuft. Somit sind beispielsweise jeweilige, auch als Rotorbleche bezeichnete Einzelbleche des Blechpakets in jeweiligen horizontalen Ebenen angeordnet beziehungsweise verlaufen horizontal. Die Einzelbleche sind beispielsweise in axialer Richtung des Blechpakets hintereinander beziehungsweise aufeinanderfolgend angeordnet und dabei entlang einer Stapelrichtung gestapelt beziehungsweise aufeinander gestapelt, wobei die Stapelrichtung beispielsweise mit der axialen Richtung des Rotors beziehungsweise des Blechpakets zusammenfällt.

Nachdem das Blechpaket lotrecht aufgestellt wurde, wird üblicherweise in vertikaler Richtung von oben die flüssige Vergussmasse in die üblicherweise sehr kleinen Zwischenräume zwischen dem Blechpaket und den Magneten eingegossen. Die Vergussmasse vernetzt sodann chemisch zu einem Feststoff, wodurch die Magnete in den Magnettaschen fixiert werden. Das chemische Vernetzen der zunächst flüssigen Vergussmasse zu dem Feststoff wird auch als Aushärten der Vergussmasse bezeichnet.

Diese herkömmlicherweise vorgesehene Vorgehensweise zum Einbringen der Vergussmasse in die Magnettaschen weist Nachteile auf. So ist das Vergießen ein sehr zeitaufwendiger Vorgang. Zum einen wird die Vergussmasse zu einem bestimmten Zeitpunkt nur jeweils in einen der Zwischenräume beziehungsweise in eine der Magnettaschen eingegossen. Es ist also für jede Magnettasche beziehungsweise für jeden Stapel übereinander angeordneter Magnettaschen beziehungsweise Magnete ein eigener Zyklus erforderlich, in dessen Rahmen die Vergussmasse in die jeweilige Magnettasche beziehungsweise in den jeweiligen Zwischenraum eingebracht wird. Zum anderen kann üblicherweise die Vergussmasse einerseits im kleinen Zwischenraum von oben nach unten fließen und andererseits im Gleichgewicht hierzu im Zwischenraum befindliche Luft nach oben steigen. Das Befüllen des Zwischenraums mit der Vergussmasse kann also nur im Gleichgewicht zwischen der Entlüftung einerseits und Nachfließen von Vergussmasse andererseits erfolgen, was zu einem erheblichen Zeit- und somit Kostenaufwand führt.

Die zuvor beschriebenen Probleme und Nachteile können durch den erfindungsgemäßen Rotor vermieden werden, da der erfindungsgemäße Rotor mit den auch als vergrabenen Magneten bezeichneten Magneten ein im Vergleich zu herkömmlichen Verfahren einfacheres und automatisierbares Vergießen ermöglicht. Somit ist der erfindungsgemäße Rotor besonders kostengünstig herstellbar.

Durch den Einsatz des beispielsweise auch als Verteilstruktur bezeichneten Verteilersystems ist es möglich, die Vergussmasse in flüssigem Zustand an genau oder wenigstens einer oder an mehreren Stellen in das Verteilersystem einzubringen, woraufhin die Vergussmasse ausgehend von der jeweiligen Stelle das Verteilersystem durchströmen und in die Magnettaschen einströmen kann. Somit ist es nicht vorgesehen und nicht erforderliche, jede Magnettasche beziehungsweise jeden Stapel separat beziehungsweise einzeln mit der Vergussmasse zu befüllen. Beispielsweise ist eine vorgebbare Anzahl an Angusspunkten vorgesehen, über welche die Vergussmasse in das Verteilersystem, insbesondere in den Verteilerkanal, eingebracht, insbesondere eingefüllt, werden kann.

Der Verteilerkanal ist beispielsweise in radialer Richtung des Blechpakets von den jeweilige Magnettaschen beabstandet und dabei über die sich beispielsweise zumindest im Wesentlichen in radialer Richtung, insbesondere von innen nach außen, erstreckenden Füllkanäle fluidisch mit den Magnettaschen verbunden. Mittels der Füllkanäle kann somit beispielsweise die Vergussmasse von dem Verteilerkanal in einer zur Stapelrichtung orthogonalen Querschnittsebene verteilt und dabei von dem Verteilerkanal, insbesondere in radialer Richtung nach außen, zu dem Magnettaschen geführt werden. So erstreckt sich beispielsweise der Verteilerkanal zumindest im Wesentlichen in axialer Richtung des Blechpakets.

Um die Magnete besonders einfach und somit zeit- und kostengünstig in den Magnettaschen fixieren zu können, ist erfindungsgemäß vorgesehen, dass ein erster Teil der jeweiligen Magnettasche durch ein erstes der Einzelbleche des Blechpakets und ein sich in axialer Richtung des Rotors direkt an den ersten Teil anschließender, zweiter Teil der jeweiligen Magnettasche durch ein sich in axialer Richtung des Rotors direkt beziehungsweise unmittelbar an das erste Einzelblech anschließendes, zweites der Einzelbleche des Blechpakets gebildet ist.

Dabei unterscheiden sich die jeweiligen Teile in ihren Formen und/oder in ihren Innenumfängen voneinander.

Hierdurch kann sich die Vergussmasse besonders vorteilhaft und insbesondere schnell in der Magnettasche verteilen und den jeweiligen Magneten effektiv fixieren.

Um dabei die Magnete besonders vorteilhaft zu fixieren sowie beispielsweise die Einzelbleche auf kostengünstige Weise untereinander zu verbinden, ist erfindungsgemäß vorgesehen, dass sich die jeweiligen Teile in ihren Formen und/oder Innenumfängen voneinander unterscheiden und dadurch wenigstens eine Hinterschneidung der jeweiligen Magnettasche bilden. Erfindungsgemäß sind die Einzelbleche durch gleiche Blechzuschnitte gebildet und in Umfangsrichtung des Rotors relativ zueinander verdreht angeordnet.

Hierdurch kann die Gleichteileanzahl besonders hoch ausgestaltet werden, sodass die Kosten in einem besonders geringen Rahmen gehalten werden können.

Weiterhin weist erfindungsgemäß die jeweilige Magnettasche wenigstens eine sich in radiale Richtung des Rotors erstreckende Ausbuchtung auf, wodurch die Magnete besonders vorteilhaft und kostengünstig vergossen werden können.

In vorteilhafter Ausgestaltung der Erfindung ist wenigstens eine Endscheibe vorgesehen, welche sich in axialer Richtung des Rotors an das Blechpaket anschließt.

Dabei hat es sich als besonders vorteilhaft gezeigt, wenn die Endscheibe wenigstens eine fluidisch mit dem Verteilerkanal verbundene Einfüllöffnung aufweist, über welche die Vergussmasse in ihrem flüssigen Zustand in das Verteilersystem einfüllbar ist beziehungsweise eingefüllt wird. Die Einfüllöffnung ist somit beispielsweise einer der zuvor genannten Angusspunkte. Bei dieser Ausführungsform ist es beispielsweise möglich, die Vergussmasse in das Verteilersystem und über dieses in die Magnettaschen einzubringen, während das Blechpaket, insbesondere die Einzelbleche, mittels der Endscheibe gespannt beziehungsweise verpresst und somit zusammengehalten ist beziehungsweise sind. Dadurch kann der Rotor besonders einfach gehandhabt und in der Folge zeit- und kostengünstig hergestellt werden.

Dabei hat es sich als besonders vorteilhaft gezeigt, wenn die Endscheibe wenigstens eine fluidisch mit dem Verteilersystem verbundene Entlüftungsöffnung zum Entlüften des Verteilersystems beim Einfüllen der Vergussmasse in das Verteilersystem aufweist. Insbesondere ist die Entlüftungsöffnung von der Einfüllöffnung beabstandet beziehungsweise getrennt, sodass beispielsweise über die Entlüftungsöffnung in dem Verteilersystem und somit insbesondere in den Magnettaschen zunächst aufgenommene Luft aus dem Verteilersystem und insbesondere aus den Magnettaschen abgeführt werden und beispielsweise an die Umgebung des Blechpakets strömen kann, während über die Einfüllöffnung die Vergussmasse in das Verteilersystem eingefüllt wird. Dadurch kann sich die Vergussmasse, insbesondere ausgehend von der Einfüllöffnung, besonders schnell in dem Verteilersystem verteilen und über das Verteilersystem in die Magnettaschen einströmen, sodass die Magnete besonders zeit- und somit kostengünstig mit der Vergussmasse versehen, das heißt vergossen werden kann.

Um die Vergussmasse auch in besonders großer Menge zeit- und kostengünstig in das Verteilersystem und über dieses in die Magnettaschen einbringen zu können, ist es bei einer weiteren Ausführungsform der Erfindung vorgesehen, dass eine zweite Endscheibe vorgesehen ist, die sich auf einer der ersten Endscheibe in axialer Richtung abgewandten Seite, insbesondere Stirnseite, des Blechpakets an das Blechpaket in axialer Richtung des Rotors anschließt. Somit ist das Blechpaket, insbesondere die Einzelbleche, in axialer Richtung zwischen den Endscheiben angeordnet, sodass beispielsweise das Blechpaket mittels der Endscheiben gespannt beziehungsweise verpresst oder zusammengepresst ist. Die zweite Endscheibe weist dabei wenigstens eine fluidisch mit dem Verteilersystem verbundene Entlüftungsöffnung zum Entlüften des Verteilersystems beim Einfüllen der Vergussmasse in das Verteilersystem auf. Die vorigen und folgenden Ausführungen zur zuerst genannten Entlüftungsöffnung können ohne weiteres auch auf die als zweites genannte Entlüftungsöffnung übertragen werden und umgekehrt.

Denkbar ist, dass die Einzelbleche durch voneinander unterschiedliche Blechzuschnitte gebildet sind (nicht Teil der beanspruchten Erfindung). Dadurch können besonders vorteilhafte Geometrien, insbesondere Formen und/oder Innenumfänge, der Magnettaschen beziehungsweise der Teile realisiert werden, sodass sich eine besonders vorteilhafte Fixierung auf einfache Weise darstellen lässt.

Um darüber hinaus auf einfache und kostengünstige Weise eine besonders hohe Leistungsfähigkeit der elektrischen Maschine zu realisieren, sind die Magnettaschen und die Magnete vorzugsweise geschränkt, sodass der Rotor eine Schränkung aufweist.

Um die beispielsweise als Permanentmagnete ausgebildeten Magnete des Rotors besonders einfach und somit zeit- und kostengünstig in den Magnettaschen fixieren zu können, ist es bei einer weiteren Ausführungsform der Erfindung vorgesehen, dass die Magnettaschen eine erste Taschengruppe bilden. Dabei weist das Blechpaket wenigstens eine in Umfangsrichtung des Blechpakets neben der ersten Taschengruppe angeordnete zweite Taschengruppe auf, welche eine Mehrzahl von in axialer Richtung des Rotors aufeinanderfolgenden beziehungsweise hintereinander angeordneten zweiten Magnettaschen umfasst. In den zweiten Magnettaschen sind jeweilige zweite Magnete, insbesondere Permanentmagnete, aufgenommen, sodass beispielsweise in der jeweiligen zweiten Magnettasche wenigstens ein zweiter Magnet aufgenommen ist. Die zweiten Magnete sind mittels der ausgehärteten Vergussmasse in den zweiten Magnettaschen fixiert.

Dabei sind die zweiten Magnettaschen über das Verteilersystem fluidisch miteinander und insbesondere fluidisch mit den ersten Magnettaschen verbunden, wobei das Verteilersystem je zweiter Magnettasche wenigstens einen fluidisch mit der jeweiligen zweiten Magnettasche verbundenen zweiten Füllkanal aufweist. Außerdem weist das Verteilersystem den wenigstens einen, den ersten Füllkanälen und den zweiten Füllkanälen gemeinsamen, fluidisch mit den ersten Füllkanälen und fluidisch mit den zweiten Füllkanälen verbundenen Verteilerkanal auf, über welchen beispielsweise die zunächst flüssige Vergussmasse in die Füllkanäle und dann in die ersten Magnettaschen und die zweiten Magnettaschen einströmen kann. Dabei erstreckt sich die ausgehärtete Vergussmasse durchgängig von Magnettasche zu Magnettasche der jeweiligen Taschengruppen durch das Verteilersystem hindurch. Mit anderen Worten erstreckt sich die ausgehärtete beziehungsweise erstarrte und somit eigensteife Vergussmasse von einer der Taschengruppen zu der jeweils anderen Taschengruppe durch das Verteilersystem hindurch durchgängig sowie innerhalb der jeweiligen Taschengruppe von Magnettasche zu Magnettasche durch das Verteilersystem hindurch durchgängig, sodass sowohl die ersten Magnete als auch die zweiten Magnete mittels des zuvor genannten einstückigen Gerippes an dem Blechpaket und somit in den jeweiligen Magnettaschen fixiert sind. Bei dieser Ausführungsform können somit nicht nur die ersten Magnete in den ersten Magnettaschen der ersten Taschengruppe, sondern auch die zweiten Magnete in den zweiten Magnettaschen der zweiten Taschengruppe auf einfache und somit zeit- und kostengünstige Weise vergossen und in der Folge fixiert werden.

Die Füllkanäle werden dabei genutzt, um die den Verteilerkanal durchströmende Gussmasse aus dem Verteilerkanal abzuzweigen und von dem Verteilerkanal in radialer Richtung, insbesondere außen, zu den jeweiligen Magnettaschen zu führen, sodass beispielsweise die Vergussmasse den Verteilerkanal in einer erste Richtung und den jeweiligen Füllkanal in eine zweite Richtung durchströmt, wobei die zweite Richtung schräg oder senkrecht zur ersten Richtung verläuft. Die erste Richtung verläuft beispielsweise parallel zur axialen Richtung des Blechpakets oder fällt mit der axialen Richtung zusammen, wobei beispielsweise die zweite Richtung in radialer Richtung des Blechpakets verläuft beziehungsweise mit der radialen Richtung des Blechpakets beziehungsweise des Rotors zusammenfällt.

Ein zweiter Aspekt der Erfindung betrifft ein Verfahren zum Herstellen eines Rotors, insbesondere eines erfindungsgemäßen Rotors, für eine elektrische Maschine, insbesondere eines Kraftfahrzeugs. Bei einem ersten Schritt des Verfahrens wird wenigstens ein Blechpaket bereitgestellt, welches eine Mehrzahl von in axialer Richtung des Rotors und somit des Blechpakets aufeinanderfolgend angeordneten Magnettaschen aufweist. Bei dem zweiten Schritt des Verfahrens wird wenigstens ein Magnet in der jeweiligen Magnettasche angeordnet. Bei dem dritten Schritt des Verfahrens wird eine, insbesondere flüssige, Vergussmasse in die Magnettaschen eingebracht, wodurch die Magnete mittels der Vergussmasse in den Magnettaschen fixiert werden.

Um nun den Rotor zeit- und kostengünstig herstellen zu können, ist es bei einem vierten Schritt des Verfahrens vorgesehen, dass wenigstens ein sich in dem Blechpaket erstreckendes Verteilersystem gebildet beziehungsweise hergestellt wird. Das Verteilersystem weist je Magnettasche wenigstens einen fluidisch mit der jeweiligen Magnettasche verbundenen Füllkanal auf. Außerdem weist das Verteilersystem wenigstens einen den Füllkanälen gemeinsamen und fluidisch mit den Füllkanälen verbundenen Verteilerkanal auf. Bei einem fünften Schritt des Verfahrens werden die Magnettaschen über das Verteilersystem fluidisch miteinander verbunden. Bei einem sechsten Schritt des Verfahrens wird die flüssige Vergussmasse in das Verteilersystem eingebracht, indem die flüssige Vergussmasse in den Verteilerkanal eingefüllt wird und durchgängig von dem Verteilerkanal in die jeweiligen Füllkanäle und von den jeweiligen Füllkanälen in die jeweiligen fluidisch mit dem Verteilersystem verbundenen Magnettaschen strömt. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt. Dabei müssen die Schritte des Verfahrens nicht notwendigerweise in der genannten Reihenfolge durchgeführt werden, sondern können auch in anderer Reihenfolge durchgeführt werden.

Schließlich hat es sich als besonders vorteilhaft gezeigt, wenn die flüssige Vergussmasse in vertikaler Richtung nach oben oder nach unten in den Verteilerkanal eingefüllt wird.

Weiterhin hat es sich als vorteilhaft gezeigt, wenn das Verteilersystem beim Einfüllen der Vergussmasse in den Verteilerkanal in vertikaler Richtung nach oben oder nach unten über die zuvor genannte Entlüftungsöffnung entlüftet wird.

Weitere Vorteile, Merkmale und Einzelheiten der Erfindung ergeben sich aus der nachfolgenden Beschreibung bevorzugter Ausführungsbeispiele sowie anhand der Zeichnung.

Die Zeichnung zeigt in:
- Fig. 1: ausschnittsweise eine schematische Perspektivansicht eines erfindungsgemäßen Rotors gemäß einer ersten Ausführungsform;
- Fig. 2: ausschnittsweise eine schematische Draufsicht des Rotors gemäß der ersten Ausführungsform;
- Fig. 3: ausschnittsweise eine schematische Schnittansicht des Rotors gemäß der ersten Ausführungsform;
- Fig. 4: ausschnittsweise eine schematische Schnittansicht des Rotors gemäß einer zweiten Ausführungsform;
- Fig. 5: ausschnittsweise eine schematische Schnittansicht des Rotors gemäß einer dritten Ausführungsform;
- Fig. 6: ausschnittsweise eine schematische Schnittansicht des Rotors gemäß einer vierten Ausführungsform;
- Fig. 7: ausschnittsweise eine schematische Schnittansicht des Rotors gemäß einer fünften Ausführungsform;
- Fig. 8: ausschnittsweise eine schematische Schnittansicht eines Rotors, wobei Fig. 8 der Erläuterung des Hintergrunds der Erfindung dient;
- Fig. 9: eine schematische Draufsicht eines Einzelbleches des Rotors gemäß einer sechsten Ausführungsform;
- Fig. 10: eine schematische Draufsicht eines Blechpakets des Rotors gemäß der sechsten Ausführungsform;
- Fig. 11: eine schematische Draufsicht eines Einzelbleches des Rotors gemäß eines siebten Beispiels, welches nicht Teil der beanspruchten Erfindung ist;
- Fig. 12: eine schematische Draufsicht eines zweiten Einzelbleches des Rotors gemäß des siebten Beispiels;
- Fig. 13: ausschnittsweise eine schematische Explosionsansicht des Rotors gemäß der sechsten Ausführungsform;
- Fig. 14: ausschnittsweise eine schematische Perspektivansicht des Rotors gemäß der siebten Ausführungsform;
- Fig. 15: ausschnittsweise eine weitere schematische Perspektivansicht des Rotors gemäß der siebten Ausführungsform;
- Fig. 16: eine schematische Schnittansicht eines Blechpakets des Rotors gemäß der zweiten Ausführungsform;
- Fig. 17: eine schematische Draufsicht eines Einzelbleches des Rotors gemäß der ersten Ausführungsform;
- Fig. 18: eine schematische Draufsicht des Blechpakets des Rotors gemäß der ersten Ausführungsform;
- Fig. 19: ausschnittsweise eine schematische Explosionsansicht des Rotors gemäß der ersten Ausführungsform;
- Fig. 20: ausschnittsweise eine schematische Perspektivansicht des Blechpakets des Rotors gemäß der ersten Ausführungsform;
- Fig. 21: eine schematische Perspektivansicht eines durch eine Vergussmasse gebildeten Gerippes des Rotors gemäß der ersten Ausführungsform;
- Fig. 22: ausschnittsweise eine schematische Perspektivansicht des Gerippes des Rotors gemäß der ersten Ausführungsform;
- Fig. 23: eine schematische Schnittansicht des Blechpakets des Rotors gemäß einer achten Ausführungsform;
- Fig. 24a-c: jeweils schematische Darstellungen zum Veranschaulichen einer Schränkung des Rotors;
- Fig. 25: eine schematische Schnittansicht eines Blechpakets eines Rotors zum Veranschaulichen des Hintergrunds der Erfindung; und
- Fig. 26: ausschnittsweise eine schematische Draufsicht des Blechpakets gemäß Fig. 25.

In den Fig. sind gleiche oder funktionsgleiche Elemente mit gleichen Bezugszeichen versehen.

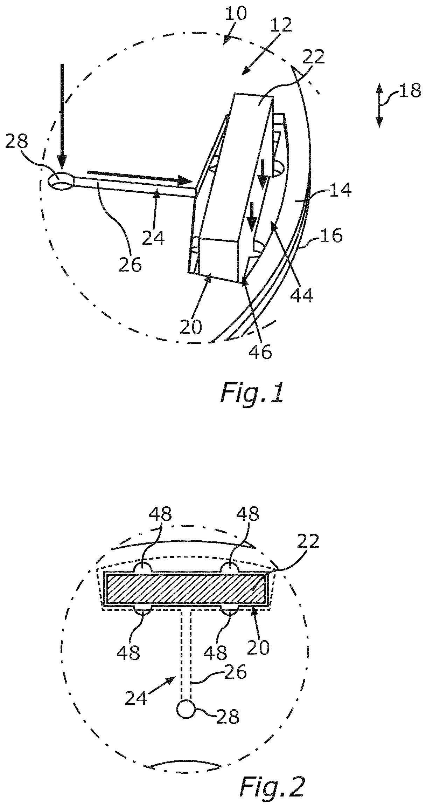

Fig. 1 zeigt ausschnittsweise in einer schematischen Perspektivansicht einen Rotor 10 für eine elektrische Maschine, insbesondere eines Kraftfahrzeugs wie beispielsweise eines Kraftwagens, insbesondere eines Personenkraftwagens. In seinem vollständig hergestellten Zustand weist das Kraftfahrzeug beispielsweise einen Antriebsstrang auf, mittels welchem das Kraftfahrzeug antreibbar ist. Dabei ist beispielsweise die elektrische Maschine Bestandteil des Antriebsstrangs, sodass das beispielsweise als Elektro- oder Hybridfahrzeug ausgebildete Kraftfahrzeug mittels der elektrischen Maschine elektrisch antreibbar ist. Die elektrische Maschine ist beispielsweise als dynamoelektrische Maschine ausgebildet und umfasst einen in den Fig. nicht erkennbaren Stator und den Rotor 10, welcher beispielsweise um eine Drehachse relativ zu dem Stator drehbar ist.

Der Rotor 10 weist wenigstens ein Blechpaket 12 auf, welches eine Mehrzahl von aufeinander angeordneten beziehungsweise aufeinander gestapelten Einzelblechen aufweist. Von diesen Einzelblechen sind in Fig. 1, welche eine erste Ausführungsform des Rotors 10 veranschaulicht, zwei mit 14 und 16 bezeichnete Einzelbleche erkennbar. Die Einzelbleche 14 und 16 sind entlang einer in Fig. 1 durch einen Doppelpfeil 18 veranschaulichten Stapelrichtung aufeinander gestapelt, wobei die Stapelrichtung beispielsweise mit der axialen Richtung des Rotors 10 zusammenfällt. Dabei fällt beispielsweise die axiale Richtung des Rotors 10 mit der genannten Drehachse zusammen. Die in Fig. 1 gezeigten Einzelbleche 14 und 16, welche auch als Rotorbleche bezeichnet werden, sind unmittelbar beziehungsweise direkt einander benachbart, sodass das Einzelblech 16 in axialer Richtung des Rotors 10 beziehungsweise entlang der Stapelrichtung unmittelbar beziehungsweise direkt auf das Einzelblech 14 folgt beziehungsweise umgekehrt.

Das Blechpaket 12 weist ferner eine Mehrzahl von in axialer Richtung des Rotors 10 aufeinanderfolgenden beziehungsweise hintereinander angeordneten Magnettaschen auf, von denen in Fig. 1 eine mit 20 bezeichnete Magnettasche gezeigt ist. Die Magnettasche 20 wird auch als Haltetasche bezeichnet. In der jeweiligen Magnettasche 20 ist ein jeweiliger, insbesondere als Permanentmagnet ausgebildeter Magnet 22 zumindest teilweise, insbesondere zumindest überwiegend oder vollständig, aufgenommen.

Um den Magneten 22 beispielsweise besonders einfach in der Magnettasche 20 anordnen zu können, ist die Magnettasche 20 innenumfangsseitig größer als der Magnet 22 außenumfangsseitig ausgebildet. Um unerwünschte Relativbewegungen zwischen dem Magneten 22 und dem Blechpaket 12 zu vermeiden, wird - wie in Fig. 1 durch Pfeile veranschaulicht ist - eine in den Fig. nicht näher dargestellte Vergussmasse eingebracht, mittels welcher der Magnet 22 in der Magnettasche 20 fixiert ist. Insbesondere wird die Vergussmasse in flüssigem Zustand in die Magnettasche 20 eingebracht. Daraufhin härtet die Vergussmasse aus, wodurch der Magnet 22 mittels der ausgehärteten Vergussmasse an dem Blechpaket 12 gehalten und dadurch in der Magnettasche 20 fixiert ist.

Um nun den Rotor 10 auf besonders einfache und somit zeit- und kostengünstige Weise herstellen zu können, sind die Magnettaschen über wenigstens ein in dem Blechpaket 12 ausgebildetes Verteilersystem 24 fluidisch miteinander verbunden. Wie aus Fig. 1 erkennbar ist, weist das Verteilersystem 24 je Magnettasche, die fluidisch mit dem Verteilersystem 24 verbunden ist, wenigstens einen fluidisch mit der jeweiligen Magnettasche 20 verbundenen Füllkanal 26 auf. Da mehrere Magnettaschen vorgesehen sind, weist das Verteilersystem 24 mehrere Füllkanäle 26 auf. Das Verteilersystem 24 weist ferner wenigstens einen den mehreren Füllkanälen 26 gemeinsamen Verteilerkanal 28 auf, welcher fluidisch mit den jeweiligen Füllkanälen 26 verbunden ist.

Im Rahmen einer Herstellung des Rotors 10 wird die Vergussmasse derart in die Magnettaschen eingebracht, dass die flüssige Vergussmasse in das Verteilersystem 24 eingefüllt beziehungsweise eingebracht wird. Dies erfolgt derart, dass die flüssige Vergussmasse in den Verteilerkanal 28 eingefüllt wird und durchgängig von dem Verteilerkanal 28 in die jeweiligen, fluidisch mit dem Verteilerkanal 28 verbundenen Füllkanäle 26 und von den Füllkanälen 26 in die jeweiligen fluidisch mit dem Verteilersystem 24 verbundenen Magnettaschen strömt. Daraufhin härtet die Vergussmasse aus, sodass sich die ausgehärtete Vergussmasse durchgängig von Magnettasche zu Magnettasche durch das Verteilersystem 24 hindurcherstreckt und dabei ein einstückiges Gerippe bildet, welches auch als Struktur, Klemmstruktur oder Gitter bezeichnet wird.

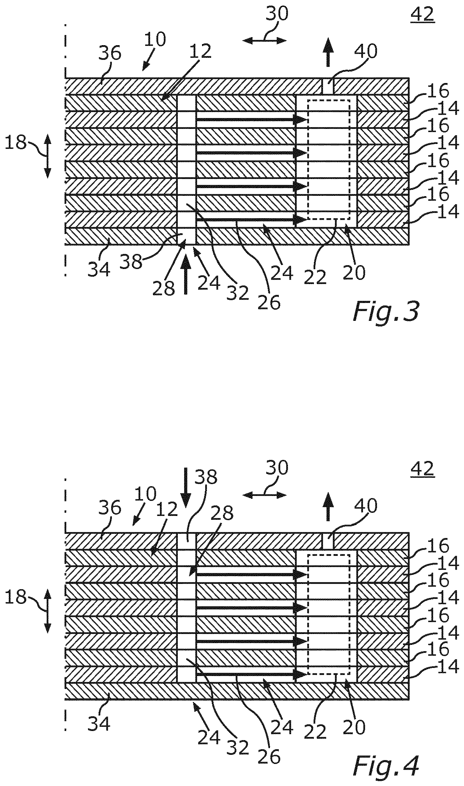

Anhand von Fig. 3 ist die erste Ausführungsform des Rotors 10 ausschnittsweise in einer schematischen Schnittansicht gezeigt. Insbesondere ist erkennbar, dass sich der Verteilerkanal 28 zumindest im Wesentlichen in axialer Richtung (Doppelpfeil 18) des Blechpakets 12 beziehungsweise des Rotors 10 erstreckt. Der jeweilige Füllkanal 26 jedoch erstreckt sich zumindest im Wesentlichen in radialer Richtung des Rotors 10 und somit des Blechpakets 12, wobei die radiale Richtung in Fig. 3 durch einen Doppelpfeil 30 veranschaulicht ist. Ferner ist besonders gut aus Fig. 3 erkennbar, dass der Verteilerkanal 28 durch jeweilige, insbesondere als Durchgangsöffnungen ausgebildete Öffnungen 32 der Einzelbleche 14 und 16 gebildet ist, insbesondere derart, dass die Einzelbleche 14 und 16 derart entlang der Stapelrichtung aufeinander gestapelt werden, dass sich die Öffnungen 32 gegenseitig zumindest teilweise, insbesondere zumindest überwiegend oder vollständig, überlappen und dadurch den Verteilerkanal 28 bilden.

Ferner ist der jeweilige Füllkanal 26 durch das jeweilige Einzelblech 14 gebildet, wobei beispielsweise das jeweilige Einzelblech 16 keinen Füllkanal aufweist. Ist beispielsweise das jeweilige Einzelblech 14 in axialer Richtung zwischen jeweils zwei direkt auf das jeweilige Einzelblech 14 folgenden Einzelblechen 16 angeordnet, so wird beispielsweise der jeweilige Füllkanal 26 in axialer Richtung beidseitig durch die jeweiligen Einzelbleche 16, insbesondere durch deren Wandungsbereiche, begrenzt. Auf diese Weise strömt die Vergussmasse in flüssigem Zustand in axialer Richtung durch den Verteilerkanal 28 und wird mittels des jeweiligen Füllkanals 26 aus dem Verteilerkanal 28 abgezweigt und zu der beziehungsweise in die Magnettasche 20 geleitet beziehungsweise geführt. Die Vergussmasse strömt dabei durch den Verteilerkanal 28 zumindest im Wesentlichen in axialer Richtung, durch den Füllkanal 26 zumindest im Wesentlichen in radialer Richtung des Blechpakets 12.

Aus Fig. 3 ist ferner besonders gut erkennbar, dass sich in axialer Richtung des Rotors 10 beidseitig an das Blechpaket 12 jeweilige Endscheiben 34 und 36 des Rotors 10 anschließen. Somit ist das Blechpaket 12 beziehungsweise sind die Einzelbleche 14 und 16 in axialer Richtung zwischen den Endscheiben 34 und 36 angeordnet. Dabei sind beispielsweise die Einzelbleche 14 und 16 beziehungsweise das Blechpaket 12 zwischen den endscheiben 34 und 36, insbesondere in axialer Richtung, geklemmt beziehungsweise gepresst.

Die Endscheibe 34 weist dabei wenigstens eine fluidisch mit dem Verteilersystem 24, insbesondere mit dem Verteilerkanal 28, verbundene Einfüllöffnung 38 auf, über welche die Vergussmasse in ihrem flüssigen Zustand in das Verteilersystem 24, insbesondere in den Verteilerkanal 28, einfüllbar ist beziehungsweise eingefüllt wird.

Bei der ersten Ausführungsform weist die auf einer der Endscheibe 34 in axialer Richtung des Rotors 10 abgewandten Seite des Blechpakets 12 angeordnete Endscheibe 36 wenigstens eine fluidisch mit dem Verteilersystem 24 verbundene Entlüftungsöffnung 40 auf, über welche insbesondere dann, wenn die Vergussmasse über die Einfüllöffnung 38 in das Verteilersystem 24 eingefüllt wird, im Verteilersystem 24 und in den Magnettaschen zunächst aufgenommene Luft aus den Magnettaschen und aus dem Verteilersystem 24, insbesondere an die Umgebung 42 des Rotors 10, entweichen kann. Hierdurch werden das Verteilersystem 24 und die Magnettaschen besonders gut und schnell entlüftet, während die Vergussmasse das Verteilersystem 24 durchströmt und in die Magnettaschen einströmt.

Fig. 4 veranschaulicht eine zweite Ausführungsform, bei welcher die Endscheibe 36 sowohl die Entlüftungsöffnung 40 als auch die Einfüllöffnung 38 aufweist. Wie bei der ersten Ausführungsform begrenzt die Endscheibe 34 wenigstens einen der Füllkanäle 26 in axialer Richtung. Darüber hinaus ist es bei der zweiten Ausführungsform vorgesehen, dass die Endscheibe 34 den Verteilerkanal 28 in axialer Richtung begrenzt beziehungsweise verschließt, um dadurch beispielsweise die Vergussmasse gezielt zuführen und unerwünschte Strömungen der Vergussmasse vermeiden zu können.

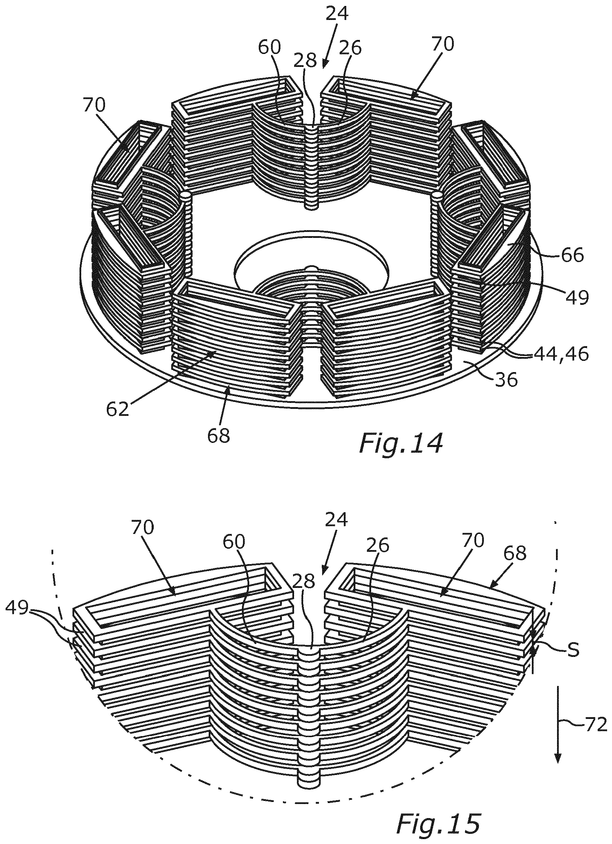

Aus Fig. 1 und 2 ist besonders gut erkennbar, dass ein erster Teil 44 der Magnettasche 20 durch das Einzelblech 14 und ein sich in axialer Richtung des Rotors 10 direkt an den ersten Teil 44 anschließender zweiter Teil 46 der Magnettasche 20 durch das sich in axialer Richtung des Rotors 10 direkt an das Einzelblech 14 anschließende Einzelblech 16 des Blechpakets 12 gebildet ist. Dabei ist es bei der ersten Ausführungsform ferner vorgesehen, dass sich die jeweiligen Teile 44 und 46 in ihren Formen und/oder Innenumfängen voneinander unterscheiden und dadurch beispielsweise eine aus Fig. 14 erkennbare Hinterschneidung 49 der jeweiligen Magnettasche 20 bilden.

Die Einfüllöffnung 38 ist beispielsweise ein sogenannter Angusspunkt, über welchen die flüssige Vergussmasse in das Verteilersystem 24 eingefüllt werden kann. Die jeweilige Endscheibe 34 beziehungsweise 36 wird auch als Endblech bezeichnet, da die jeweilige Endscheibe 34 beziehungsweise 36 beispielsweise aus einem Blech und somit aus einem metallischen Werkstoff gebildet ist. Die jeweilige Endscheibe 34 beziehungsweise 36 ist dabei in einem jeweiligen axialen Endbereich des Rotors 10 angeordnet. Vorzugsweise sind mehrere Einfüllöffnungen 38 beziehungsweise Angusspunkte und/oder mehrere Entlüftungsöffnungen 40 vorgesehen. Die Einfüllöffnung 38 und/oder die Entlüftungsöffnung 40 und/oder die jeweilige Öffnung 32 sind beispielsweise als Bohrungen ausgebildet.

Wie aus Fig. 3 erkennbar ist, sind mehrere Einzelbleche 14 und 16 vorgesehen, deren Anzahl größer als 2 ist, wobei die mehreren Einzelbleche 14 und 16 die jeweiligen Teile 44 und 46 bilden und derart in axialer Richtung aufeinander gestapelt sind, dass die jeweiligen Teile 44 und 46 die Magnettasche 20 bilden. Der jeweilige Teil 44 beziehungsweise 46 ist somit beispielsweise eine insbesondere als Durchgangsöffnung des jeweiligen Einzelblechs 14 beziehungsweise 16 ausgebildete Ausnehmung, wobei die Einzelbleche 14 und 16 derart aufeinander gestapelt werden, dass sich die Ausnehmungen gegenseitig zumindest teilweise, insbesondere zumindest überwiegend oder vollständig, überlappen und dadurch die jeweilige Magnettasche wie beispielsweise die Magnettasche 20 bilden.

Da der jeweilige Teil 44 beziehungsweise 46 beispielsweise innenumfangsseitig größer als der Magnet 22 außenumfangsseitig ausgebildet ist, sind in radialer Richtung zwischen dem Magneten 22 und den Einzelblechen 14 und 16 beziehungsweise dem Blechpaket 12 jeweilige Spalte beziehungsweise Zwischenräume vorgesehen, in die die Vergussmasse eingebracht wird beziehungsweise einströmen kann.

Der jeweilige Füllkanal 26 ist beispielsweise durch einen insbesondere als Durchgangsöffnung ausgebildeten Durchbruch des jeweiligen Einzelblechs 14 gebildet, wobei der Füllkanal 26 in axialer Richtung des Rotors 10 beidseitig durch jeweilige Einzelbleche 16 begrenzt wird, die sich in axialer Richtung unmittelbar beziehungsweise direkt an das jeweilige Einzelblech 14 mit dem Füllkanal 26 anschließen.

In Fig. 2 sind beispielsweise der Füllkanal 26 und der Teil 44 des Einzelblechs 14 gestrichelt dargestellt. Des Weiteren ist aus Fig. 2 besonders gut erkennbar, dass die Magnettasche 20, insbesondere der Teil 46, wenigstens eine oder mehrere Ausbuchtungen 48 aufweist, welches sich insbesondere in radialer Richtung des Rotors 10 erstrecken. Dadurch kann beispielsweise die Vergussmasse besonders gut von dem Teil 44 zu dem jeweiligen darauffolgenden Teil 46 strömen, sodass sich die Vergussmasse besonders gut und besonders schnell in der Magnettasche 20 verteilen kann.

Die Teile 44 und 46 sind somit jeweilige Taschengeometrien, welche bei der ersten Ausführungsform in unterschiedlicher Ausführung beziehungsweise Geometrie und Größe ausgebildet sind. Dabei ist dem Teil 44 der Füllkanal 26 zugeordnet, während das Einzelblech 16 keinen Füllkanal aufweist, sodass dem Teil 46 kein Füllkanal zugeordnet ist. Auf diese Weise können die jeweiligen, sich in axialer Richtung beidseitig an das Einzelblech 14 anschließenden Einzelbleche 16 den Füllkanal 26 in axialer Richtung beidseitig begrenzen beziehungsweise verschließen.

Das auf die beschriebene Weise durchgeführte Fixieren der Magnete in den Magnettaschen wird auch als Vergießen bezeichnet, wobei die Vergussmasse auch als Verguss bezeichnet wird. Beim Vergießen gelangt der Verguss vom Verteilerkanal 28 über die jeweiligen Füllkanäle 26 in die jeweilige Magnettasche, wobei die jeweilige Magnettasche größer dimensioniert ist als der jeweilige Füllkanal 26. In der Magnettasche 20 umfließt die auch als Füllmaterial bezeichnete Vergussmasse den Magneten 22 und gelangt über den genannten, insbesondere den Magneten 22 umlaufenden Spalt zwischen dem Magneten 22 und dem Blechpaket 12 beispielsweise von dem Teil 44 in den Teil 46 und füllt einen dortigen Raum aus. Durch die genannte Variation der Taschengeometrie entstehen in Stapelrichtung betrachtet in der jeweiligen, auch als Kavität bezeichneten Magnettasche 20 Hinterschneidungen, Vertiefungen, Ausbuchtungen, Einschnitte usw., die beim Ausfüllen der Kavität mit der Vergussmasse nach deren Aushärtung zu einer Verbindung, insbesondere zu einem Form- und/oder Stoffschluss, der aufeinander gestapelten Einzelbleche 14 und 16 miteinander führen.

Aus Fig. 3 ist erkennbar, dass es bei der ersten Ausführungsform vorgesehen ist, dass die Vergussmasse in vertikaler Richtung von unten in das Verteilersystem 24 eingebracht beziehungsweise eingeführt wird. Ferner ist es bei der ersten Ausführungsform vorgesehen, dass das Verteilersystem und die Magnettaschen in vertikaler Richtung nach oben entlüftet werden. Somit wird beispielsweise die Vergussmasse in das Verteilersystem 24 eingebracht, während der Rotor 10 lotrecht aufgestellt ist, sodass die axiale Richtung des Rotors in vertikaler Richtung verläuft beziehungsweise mit der vertikalen Richtung zusammenfällt.

Bei der in Fig. 4 veranschaulichten Ausführungsform wird die Vergussmasse in vertikaler Richtung von oben nach unten in das Verteilersystem 24 eingebracht. Ferner werden das Verteilersystem 24 und die Magnettaschen in vertikaler Richtung von unten nach oben entlüftet.

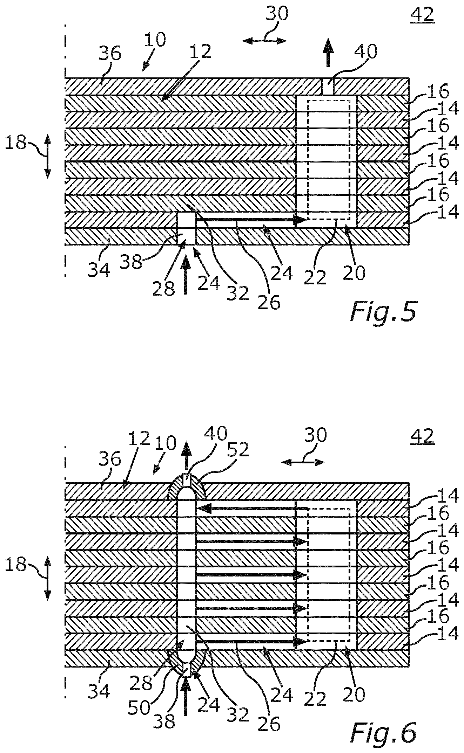

Fig. 5 veranschaulicht eine dritte Ausführungsform. Während bei der zweiten und bei der ersten Ausführungsform je Magnettasche mehrere Füllkanäle 26 vorgesehen sind, ist bei der dritten Ausführungsform je Magnettasche genau ein Füllkanal 26 vorgesehen.

Fig. 6 zeigt eine vierte Ausführungsform, bei welcher die jeweilige Endscheibe 34 beziehungsweise 36 wenigstens eine umlaufende Sicke 50 beziehungsweise 52 aufweist. Dabei ist die Einfüllöffnung 38 in der Sicke 50 ausgebildet, wobei die Entlüftungsöffnung 40 in der Sicke 52 ausgebildet ist.

Während bei der ersten, zweiten und dritten Ausführungsform die Einfüllöffnung 38 und die Entlüftungsöffnung 40 desachsiert zueinander angeordnet beziehungsweise versetzt zueinander sind, sodass sich die Einfüllöffnung 38 und die Entlüftungsöffnung 40 nicht gegenseitig überlappen beziehungsweise überdecken, sind die Einfüllöffnung 38 und die Entlüftungsöffnung 40 bei der vierten Ausführungsform koaxial beziehungsweise in gegenseitiger Überdeckung oder Überlappung angeordnet.

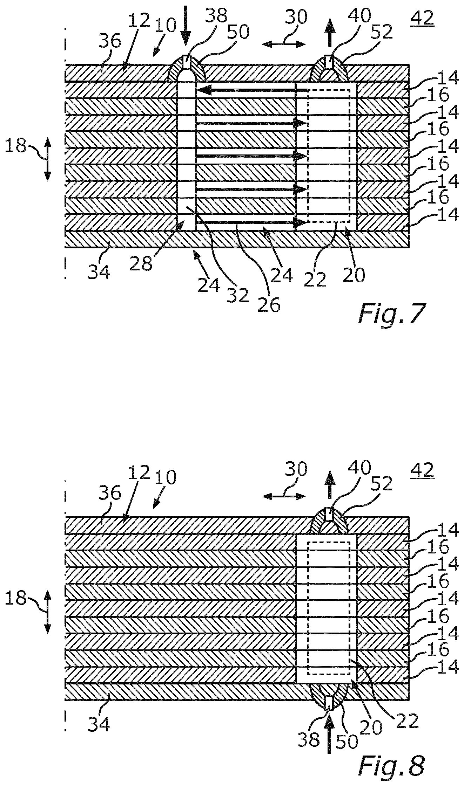

Fig. 7 zeigt eine fünfte Ausführungsform, bei welcher die Endscheibe 36 die Sicke 50 mit der Einfüllöffnung 38 sowie die Sicke 53 mit der Entlüftungsöffnung 40 aufweist. Die Sicke 50 und/oder 52 ist beispielsweise als umlaufende Sicke ausgebildet.

Fig. 8 zeigt ausschnittsweise in einer schematischen Schnittansicht einen Rotor 10, bei welchem weder ein Füllkanal noch ein Verteilerkanal vorgesehen ist.

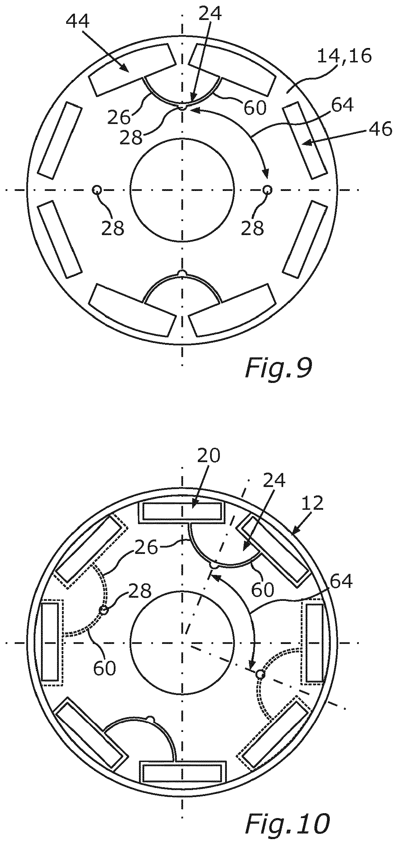

Anhand von Fig. 9 und 10 ist eine sechste Ausführungsform des Rotors 10 veranschaulicht. Bei der sechsten Ausführungsform sind die Einzelbleche 14 und 16 durch gleiche Blechzuschnitte gebildet, sodass die Einzelbleche 14 und 16 baugleich beziehungsweise identisch oder gleichartig ausgebildet sind. Dabei bildet das jeweilige Einzelblech 14 beziehungsweise 16 sowohl die jeweiligen Teile 44 als auch die jeweiligen Teile 46. Dabei sind die Einzelbleche 14 und 16 in Umfangsrichtung des Rotors 10 relativ zueinander verdreht angeordnet, insbesondere derart, dass beispielsweise der jeweilige Teil 44 auf den jeweils zugehörigen Teil 46 beziehungsweise umgekehrt zum Liegen kommt. Insbesondere sind die Einzelbleche 14 und 16 in Umfangsrichtung des Blechpakets 12 um 90 Grad zueinander verdreht angeordnet, wodurch die jeweilige Magnettasche durch die unterschiedlichen Teile 44 und 46 gebildet ist, wobei jedoch das Blechpaket 12 ausschließlich gleiche beziehungsweise identische Einzelbleche 14 und 16 aufweist.

Bei der sechsten Ausführungsform ist es somit vorgesehen, dass die jeweilige Magnettasche im Blechpaket 12 durch eine Rotation der gleichen Einzelbleche 14 und 16 oder auch von Gruppen gleichartiger Einzelbleche 14 und 16 hergestellt werden, sodass die Einzelbleche 14 und 16 nicht nur aufeinander gestapelt, sondern auch in Umfangsrichtung des Blechpakets 12 relativ zueinander gedreht werden. Hierzu werden beispielsweise in jedem Einzelblech 14 beziehungsweise 16 drehsymmetrisch angeordnete Ausnehmungen für die jeweilige Magnettasche in verschiedener Größe eingebracht. Beim Stapeln werden dann die Einzelbleche 14 und 16 oder auch Gruppen gleichartiger Einzelbleche 14 und 16 jeweils verdreht aufeinander abgelegt, wobei die Ausnehmungen unterschiedlicher Größe jeweils miteinander in Überdeckung geraten. Insbesondere ist es möglich, dass sich die in Überdeckung miteinander gebrachten Ausnehmungen der jeweiligen Magnettasche nicht oder nicht nur durch ihre Größe, sondern durch ihre Formgebung voneinander unterscheiden.

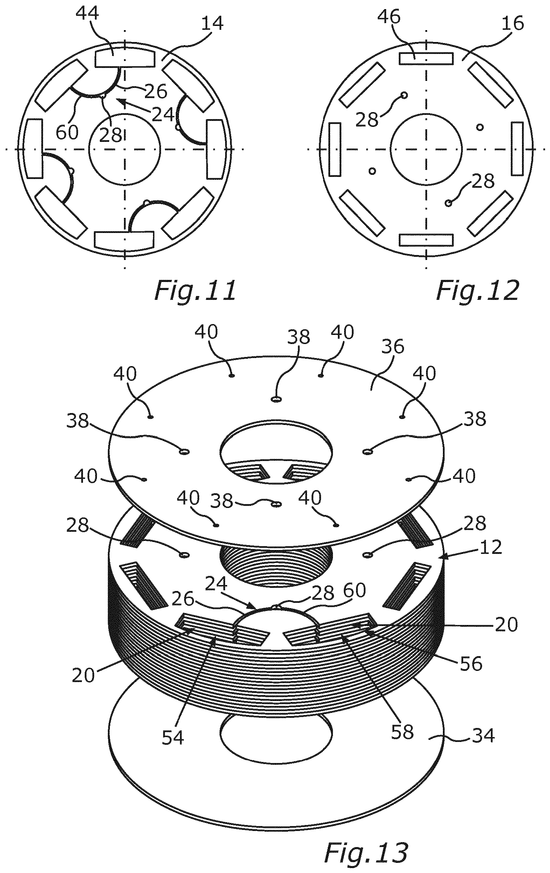

Fig. 11 und 12 veranschaulichen ein siebtes Beispiel, welches nicht Ausführungsform der beanspruchten Erfindung ist, bei welcher die Einzelbleche 14 und 16 durch voneinander unterschiedliche Blechzuschnitte gebildet sind. Bei der siebten Ausführungsform werden somit wenigstens zwei Sorten von Einzelblechen bereitgestellt. Zu einer ersten der Sorten gehört das Einzelblech 14, während das Einzelblech 16 zur zweiten Sorte gehört. Die Ausnehmungen der Einzelbleche 14 und 16 überlappen sich dabei im Wesentlichen zueinander. Während die Ausnehmungen des Einzelblechs 14 gleich sind, sind die Ausnehmungen des Einzelblechs 16 gleich. Jedoch unterscheiden sich die Ausnehmungen des Einzelblechs 16 von den Ausnehmungen des Einzelblechs 14 insbesondere hinsichtlich ihrer Form und/oder hinsichtlich ihres Innenumfangs, wodurch durch Stapeln der Einzelbleche 14 und 16 aufeinander die jeweilige Magnettasche mit den voneinander unterschiedlichen Teilen 44 und 46 gebildet wird. Mit anderen Worten werden die zwei Sorten von Einzelblechen entlang der Stapelrichtung abwechselnd aufeinander gestapelt beziehungsweise in kleinen Stapeln von gleichartigen Einzelblechen abwechseln aufeinander gestapelt. Aus Fig. 9 bis 12 ist beispielsweise erkennbar, dass die Magnettaschen, zu denen die Magnettasche 20 gehört, auch als erste Magnettaschen bezeichnet werden und eine erste Taschengruppe 54 bilden. Besonders gut in Zusammenschau mit Fig. 13, welche die sechste Ausführungsform veranschaulicht, ist erkennbar, dass das Blechpaket 12 somit die erste Taschengruppe 54 als auch eine zweite Taschengruppe 56 aufweist. Der Einfachheit wegen werden beispielsweise die Magnettaschen der ersten Taschengruppe 54 als erste Magnettaschen 20 bezeichnet. Die zweite Taschengruppe 56 ist in Umfangsrichtung des Blechpakets 12 neben der ersten Taschengruppe 54 angeordnet und umfasst eine Mehrzahl von in axialer Richtung des Rotors 10 aufeinanderfolgend angeordneten zweiten Magnettaschen 58, auf welche die vorigen und folgenden Ausführungen zu den ersten Magnettaschen 20 übertagen werden können und umgekehrt. Auch in den zweiten Magnettaschen 58 sind jeweilige zweite Magnete aufgenommen, die mittels der ausgehärteten Vergussmasse in den zweiten Magnettaschen 58 fixiert sind.

Dabei sind die zweiten Magnettaschen 58 über das Verteilersystem 24 fluidisch miteinander und beispielsweise fluidisch mit den ersten Magnettaschen verbunden. Das Verteilersystem 24 weist dabei je zweiter Magnettasche 58 wenigstens einen fluidisch mit der jeweiligen zweiten Magnettasche 58 verbundenen zweiten Füllkanal 60 und den wenigstens einen, den ersten Füllkanälen 26 und den zweiten Füllkanälen 60 gemeinsamen, fluidisch mit den Füllkanälen 26 und 60 verbundenen Verteilerkanal 28 auf. Dabei erstreckt sich die ausgehärtete Vergussmasse durchgängig von Magnettasche 20 und 58 zu Magnettasche 20 und 58 durch das Verteilersystem 24 hindurch, sodass die Vergussmasse beim Einfüllen in die Magnettaschen 20 und 58 von dem Verteilerkanal 28 nicht nur in die Magnettaschen 20 über die Füllkanäle 26, sondern auch die Magnettaschen 58 über die Füllkanäle 60 strömen kann.

Insgesamt ist zu erkennen, dass dem Rotor 10 die Idee zugrunde liegt, die Vergussmasse zum Vergießen der Magneten 22 beziehungsweise der Magnettaschen 20 und 58 nicht in jede einzelne Magnettasche eingefüllt werden muss, sondern sich über die jeweilige Endscheibe 34 beziehungsweise 36, den Verteilerkanal und die Füllkanäle 26 und 60 in den einzelnen Magnettaschen 20 und 58 verteilen kann. Ein derartiges Vergießen der Magnettaschen 20 und 58 mittels des Verteilersystems 24 kann automatisiert erfolgen, wodurch der Fertigungsaufwand besonders gering gehalten werden kann. Insbesondere ist es möglich, die Vergussmasse dem Blechpaket 12 über die genannten Angusspunkte seitlich zu den Magnettaschen 20 und 58 zuzuführen. In den Magnettaschen 20 und 58 sowie in dem Verteilersystem 24 eingeschlossene Luft kann jeweils nach oben oder unten hin abgeführt und somit entlüftet werden. Ferner ist es möglich, als die Vergussmasse eine hochviskose Vergussmasse zu verwenden. Weiterhin ist es möglich, die Zwischenräume zwischen dem Blechpaket 12 und den Magneten 22 gleichlaufend und schnell mit der Vergussmasse zu füllen. Ein seitliches Austreten aus dem Blechpaket 12 sowie eine Blasenbildung werden zumindest nahezu vollständig vermieden.

Es ist vorteilhaft, dass der jeweilige Angusspunkt in dem jeweiligen Endblech angeordnet ist. In der Regel ist der jeweilige Angusspunkt axial zugänglich. Die Anzahl an Angusspunkten kann nach Bedarf bestimmt sein, kann aber von der Anzahl an Magnettaschen abhängig sein. In der Regel ist die Anzahl an Angusspunkten jedoch größer als 2.

Im Rahmen eines Verfahrens zum Herstellen des Rotors 10 ist vorgesehen, dass zunächst das Blechpaket 12 mit den jeweiligen Magnettaschen hergestellt wird, nämlich aus den auch als Elektrobleche bezeichneten Einzelblechen 14 und 16. Ferner werden beispielsweise an jeweiligen Stirnseiten des Blechpakets 12 die Endbleche angeordnet. Die Endbleche sind dabei entweder geschlossen oder jeweils mit wenigstens einer Einfüllöffnung 38 und/oder einer Entlüftungsöffnung 40 ausgebildet. Das Blechpaket 12 und die Endscheiben 34 und 36 (Endbleche) bilden beispielsweise eine Baueinheit, welche mittels einer Vorrichtung beziehungsweise in der Vorrichtung fixiert wird. Die Vorrichtung presst das Blechpaket 12 beziehungsweise die Baueinheit in axialer Richtung und dichtet das Blechpaket 12, insbesondere die Baueinheit, ab. Daraufhin wird die Vergussmasse auf die beschriebene Weise in das Verteilersystem 24 eingefüllt, insbesondere mittels einer Befüllungseinrichtung. Insbesondere wird die Vergussmasse unter Druck in das Verteilersystem 24 eingefüllt, sodass die Vergussmasse durch den Verteilerkanal 28 und die Füllkanäle 26 beziehungsweise 60 seitlich in die Magnettaschen 20 beziehungsweise 58 fließt. Dabei kann die Vergussmasse gleichzeitig von unten in Richtung der jeweils anderen Stirnseite, insbesondere in Richtung der Entlüftungsöffnung 40, gedrückt werden. Daraufhin härtet die Vergussmasse aus.

Die Vergussmasse kann in dünnflüssiger bis zäh-viskoser Form in das Verteilersystem 24 beziehungsweise in die Magnettaschen 20 beziehungsweise 58 eingebracht werden. Die Verteilung der eingebrachten Vergussmasse kann hierbei durch Gravitation, Vibration und/oder durch mechanische Stöße unterstützt werden. Bevorzugt wird die Vergussmasse jedoch in die Magnettaschen 20 und 58 eingepresst. Durch das Einpressen wird in einfacher Weise eine hinreichende Befüllung vorhandener Querräume beziehungsweise des Verteilersystems 24 und der Magnettaschen 20 und 58 erreicht.

In einer weiter bevorzugten Ausgestaltungsvariante werden das Verteilersystem 24 und/oder die Magnettaschen 20 mit der Vergussmasse ausgeschäumt. Mit anderen Worten härtet beispielsweise die eingebrachte Vergussmasse unter einer Volumenausdehnung aus.

Vorteilhafterweise wird als die Vergussmasse ein Thermoplast verwendet. Ein solcher Thermoplast erlaubt es, in das Verteilersystem 24 beziehungsweise in die Magnettaschen 20 und 58 mittels Extrusion eingebracht zu werden. Dabei wird die beispielsweise erhitzte und verflüssigte Vergussmasse unter Druck mittels wenigstens einer Düse oder dergleichen in das Verteilersystem 24 beziehungsweise in die Magnettaschen 20 und 58 eingespritzt. Anschließend härtet die Vergussmasse durch Abkühlung aus. Alternativ kann als die Vergussmasse ein aushärtendes Harzsystem verwendet werden.

Fig. 14 und 15 veranschaulichen eine siebte Ausführungsform des Rotors 10. Wie besonders gut aus Fig. 14 und 15 erkennbar ist, bildet die ausgehärtete Vergussmasse das wenigstens eine, in Fig. 14 und 15 mit 62 bezeichnete Gerippe, welches auch als Struktur, Klemmstruktur oder Gitter bezeichnet wird.

Insbesondere bildet die Vergussmasse beispielsweise je Taschengruppe 54 beziehungsweise 56 ein Gerippe. Da beispielsweise die Taschengruppen 54 und 56 über das Verteilersystem 24 fluidisch miteinander verbunden sind, bilden die Taschengruppen 54 und 56 eine Gruppenanordnung. Mit anderen Worten umfasst eine solche Gruppenanordnung Taschengruppen, welche über das Verteilersystem 24 fluidisch miteinander verbunden sind. Dabei bildet beispielsweise die Vergussmasse je Gruppenanordnung ein Gerippe 62. Bei der siebten Ausführungsform sind vier Gruppenanordnungen und demzufolge vier Gerippe 62 vorgesehen. Das jeweilige Gerippe 62 ist eine durch die ausgehärtete Vergussmasse gebildete, einstückige Komponente, welche verwendet wird, um die Magnete 22 in den Magnettaschen 20 und 58 zu fixieren. Insbesondere durch die genannte Hinterschneidung 49 werden die Einzelbleche 14 und 16 mittels des Gerippes 62 auch untereinander beziehungsweise miteinander verbunden. Ferner hat das Gerippe 62 eine dämpfende Funktion, sodass beispielsweise während eines Betriebs der elektrischen Maschine übermäßige Schwingungen und daraus resultierende Geräusche vermieden werden können. Das Gerippe 62 ist eine Klemmstruktur zum Fixieren der Magnete 22 in den Magnettaschen 20 und 58.

Die Einbringung der zusätzlichen Klemmstruktur in das Blechpaket 12 ist massentauglich und kann in üblichen Herstellprozessen mittels mehrerer Stanz-, Press- und Schneideschritte problemlos integriert werden. Die Klemmstruktur wird beispielsweise durch das Verfahren zum Herstellen des Blechpakets 12 realisiert, wobei die Einzelbleche 14 und 16 mit ihrer jeweiligen, wenigstens eine Ausnehmung vorgegebenen Kontur gefertigt werden und derart zu einem Stapel aufeinander gestapelt werden, dass mittels der jeweiligen Ausnehmungen in Stapelrichtung wenigstens eine zumindest einseitig offene Kavität, insbesondere in Form der jeweiligen Magnettasche 20 beziehungsweise 58, gebildet wird, deren Querausdehnung entlang der Stapelrichtung variiert.

Die Kavität wird auf die beschriebene Weise mit der ein härtbares Füllmaterial darstellenden Vergussmasse gefüllt, insbesondere ausgefüllt, woraufhin das Füllmaterial aushärtet beziehungsweise ausgehärtet wird. In der Folge werden beispielsweise die Einzelbleche 14 und 16 mittels Form- und/oder Stoffschluss aneinander gefügt, insbesondere über das Gerippe 62.

Zur Ausbildung der jeweiligen Kavität ist es nicht notwendigerweise erforderlich, zusätzliche Ausnehmungen in die Einzelbleche 14 und 16 einzubringen. Vielmehr kann zur vorbeschriebenen Technik grundsätzlich auf bereits vorhandene Ausnehmungen der Einzelbleche 14 und 16 zurückgegriffen werden. Im einfachsten Fall weisen die beispielsweise durch Stanzen oder durch ein anderes Umformverfahren eingebrachten Ausnehmungen bereits selbst eine in Statorrichtung variierende Querausdehnung auf. Beispielsweise kann durch einen Stanzvorgang aufgrund des verwendeten Werkzeugs die Wand einer solchen Ausnehmung eine konvexe oder konkave Form aufweisen. Werden die Einzelbleche 14 und 16 dann mit ihren Ausnehmungen aufeinander gestapelt, weist die daraus resultierende Kavität zwangsläufig in Statorrichtung bereits die für einen Formschluss notwendige variable Querausdehnung auf.

Insbesondere ist je Gruppenanordnung ein Verteilersystem 24 vorgesehen, sodass beispielsweise mehrere, insbesondere in Umfangsrichtung des Blechpakets 12 voneinander beabstandete Verteilerkanäle 28 vorgesehen sind. Dabei ist aus Fig. 9 erkennbar und anhand eines Doppelpfeils 64 veranschaulicht, dass bei der sechsten Ausführungsform und bei der siebten Ausführungsform beispielsweise vier Verteilerkanäle 28 vorgesehen sind, welche paarweise in Umfangsrichtung des Blechpakets 12 um 90 Grad zueinander versetzt angeordnet sind. Der jeweilige Verteilerkanal 28 ist - wie zuvor anhand der jeweiligen Öffnung 32 beschrieben - durch jeweilige, in Stapelrichtung beziehungsweise in axialer Richtung aufeinander angeordnete und sich gegenseitig überlappende Öffnungen insbesondere in Form von Durchgangsöffnungen der jeweiligen Einzelbleche 14 und 16 gebildet. Besonders gut aus Fig. 9 ist erkennbar, dass der Teil 44 eine erste Taschengeometrie mit dem Füllkanal 26 beziehungsweise 60 ist, während beispielsweise der zweite Teil 46 eine Taschengeometrie ohne Füllkanal ist.

Besonders gut aus Fig. 13 ist beispielsweise erkennbar, dass je Verteilersystem 24 wenigstens eine Einfüllöffnung 38 sowie wenigstens eine Entlüftungsöffnung 40 vorgesehen sind. Bei der sechsten Ausführungsform sind je Verteilersystem 24 zwei Entlüftungsöffnungen 40 vorgesehen. Dabei bildet die Endscheibe 36 sowohl die Entlüftungsöffnungen 40 als auch die Einfüllöffnung 38, sodass die Endscheibe 34 als geschlossene Endscheibe, insbesondere als geschlossenes Endblech, ausgebildet ist.

Aus Fig. 14 ist erkennbar, dass durch den Teil 44 beispielsweise eine besonders vorteilhafte Ausbuchtung 66 der Vergussmasse hergestellt werden kann. Da in Fig. 14 das jeweilige Gerippe 62 erkennbar ist, welches durch die Vergussmasse gebildet ist, ist die Vergussmasse in Fig. 14 mit 68 bezeichnet. Dabei bildet das Gerippe 62 jeweilige Durchgangsöffnungen 70 für die Magnete 22. Außerdem ist in Fig. 15 die in axialer Richtung verlaufende Dicke s des Gerippes 62 veranschaulicht, wobei die Dicke s dem ganzzahligen Vielfachen der Blechdicke des jeweiligen Einzelbleches 14 beziehungsweise 16 entspricht. Außerdem veranschaulicht in Fig. 15 ein Pfeil 72 die Stapelrichtung des Blechpakets 12.

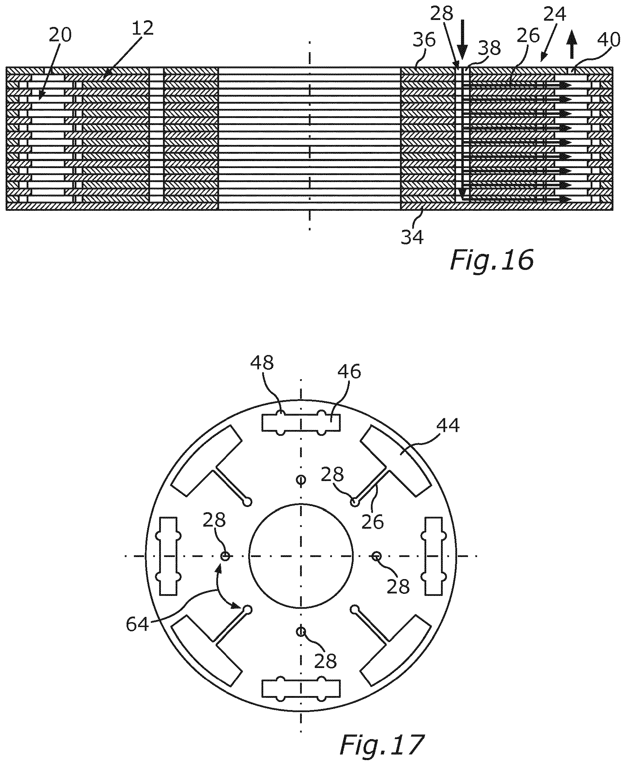

Fig. 16 zeigt in einer schematischen Schnittansicht das Blechpaket 12 gemäß der zweiten Ausführungsform.

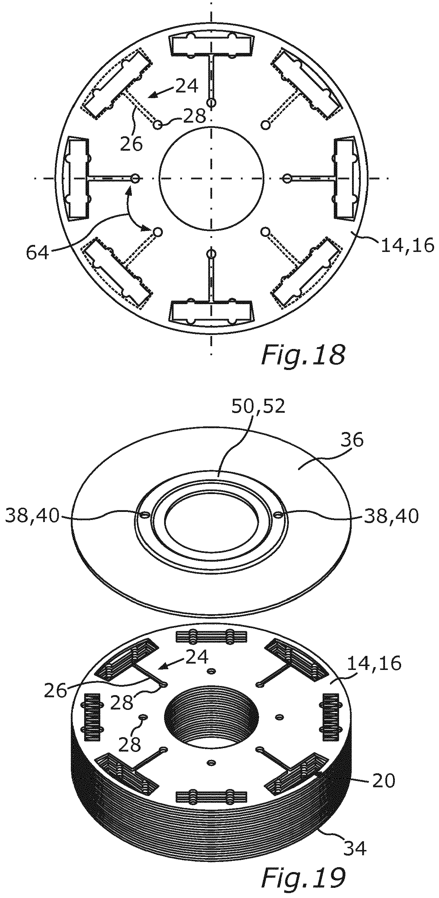

Fig. 17 bis 22 veranschaulichen die erste Ausführungsform weiter. Während beispielsweise bei der in Fig. 9 veranschaulichten sechsten Ausführungsform die Verteilerkanäle 28 in Umfangsrichtung des Blechpakets 12 paarweise um 90 Grad voneinander beabstandet sind, sind die Verteilerkanäle 28 bei der ersten Ausführungsform paarweise in Umfangsrichtung des Blechpakets 12 um 45 Grad voneinander beabstandet. Bei der ersten Ausführungsform sind beispielsweise keine Gruppenanordnungen vorgesehen, sodass beispielsweise bei der ersten Ausführungsform die jeweiligen Taschengruppen 54 und 56 nicht fluidisch miteinander verbunden sind. Dabei ist je Taschengruppe ein Verteilerkanal 28 vorgesehen, sodass bei acht Taschengruppen acht Verteilerkanäle 28 vorgesehen sind.

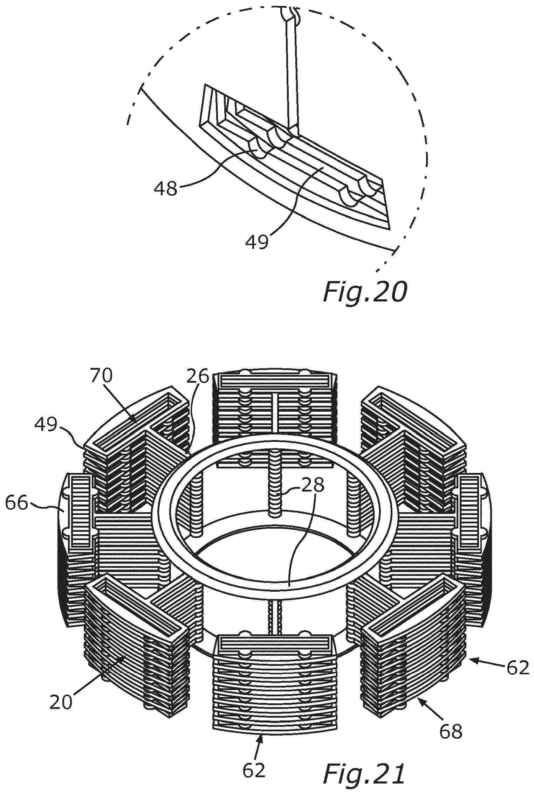

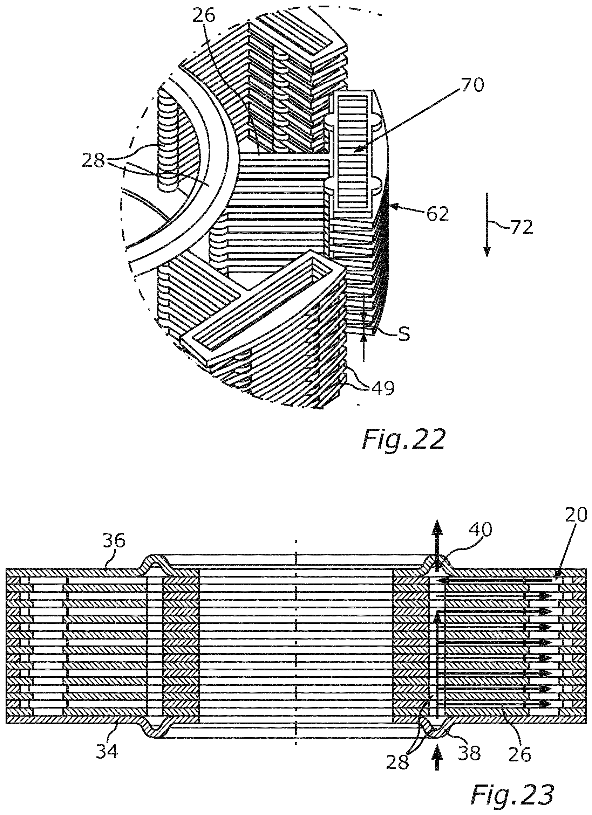

Besonders gut aus Fig. 20 ist erkennbar, dass die Ausbuchtung 48 eine Erweiterungsgeometrie der jeweiligen Magnettasche 20 beziehungsweise des Teils 46 ist. Außerdem ist aus Fig. 20 besonders gut die jeweilige Hinterschneidung 49 erkennbar. Besonders gut aus Fig. 21 und 22 ist das Gerippe 62 bei der ersten Ausführungsform erkennbar.

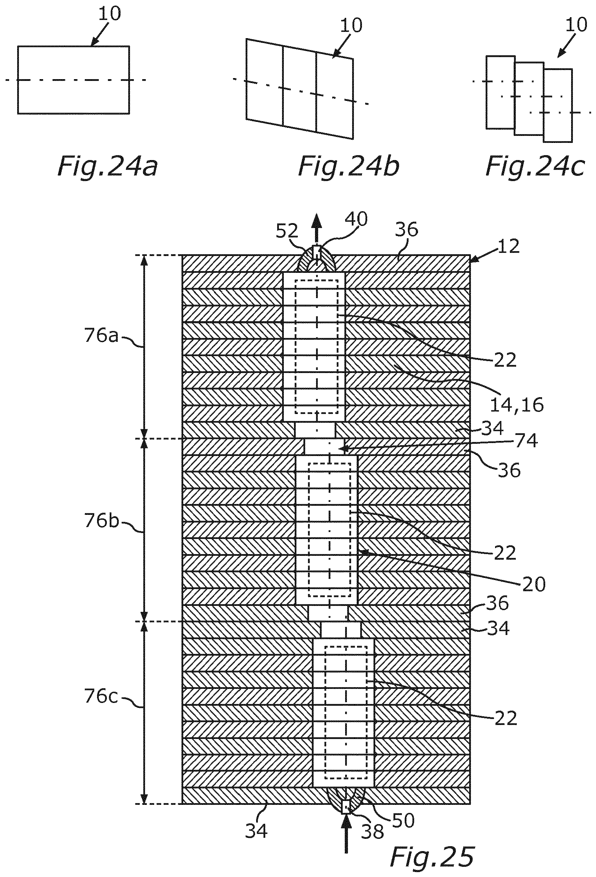

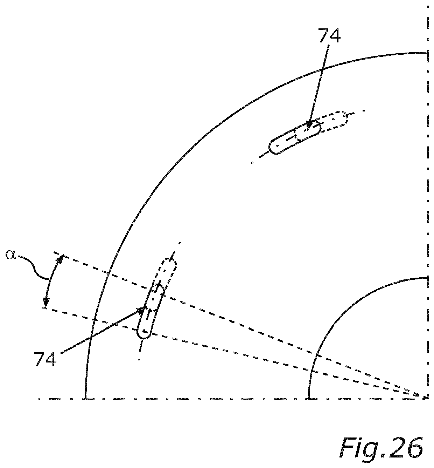

Schließlich zeigt Fig. 23 eine achte Ausführungsform. Die vorigen Ausführungen zum Blechpaket 12 insgesamt können auch auf jeweilige, als Teilblechpakete ausgebildete Blechpakete mit jeweiligen Endblechen übertragen werden. Wird beispielsweise das Blechpaket 12 insgesamt aus mehreren Teilblechpaketen, insbesondere mit schrittweiser Schränkung, hergestellt, so werden beispielsweise zunächst die Teilblechpakete mit Endblechen und eingelegten Magneten gefertigt und verschweißt. Daraufhin wird das Blechpaket 12 insgesamt durch Stapeln der Teilblechpakete mit schrittweiser Schränkung hergestellt, woraufhin die Magnete auf die beschriebene Weise vergossen beziehungsweise in den Magnettaschen fixiert werden. Der Verguss der Magnete ist alternativ im schrittweise verschränkten und aus Teilblechpaketen zusammengebauten Blechpaket des Rotors 10 möglich. Die jeweiligen, innenliegenden Endbleche der Teilblechpakete weisen hierfür jeweils auf einem Teilkreis liegende Langlöcher auf, welche beispielsweise aus Fig. 25 und 26 erkennbar und dort mit 74 bezeichnet sind. So sind die Magnettaschen der geschränkten Teilblechpakete jeweils über die Endbleche direkt oder über die Verteilerkanäle 28 indirekt fluidisch miteinander verbunden und bilden eine über das gesamte Blechpaket durchgehende Kavität, sodass die Magnete besonders einfach mit der Vergussmasse vergossen werden können.

Eine elektrische Maschine mit innenliegenden Magneten, insbesondere Permanentmagneten, enthält im Allgemeinen einen Rotor, der eine Vielzahl von Magneten mit abwechselnder Polarität um den Außenumfang des Rotors herum aufweist. Der Rotor ist innerhalb des Stators drehbar, der im Allgemeinen eine Vielzahl von Wicklungen und Magnetpolen mit abwechselnder Polarität enthält. Herkömmlicherweise ist die Konfiguration von Magneten in elektrische Maschinen mit innenliegenden Permanentmagneten radial symmetrisch, das heißt sie zeigt eine Symmetrie bezüglich des Ursprungs. Dies ist beispielsweise in Fig. 24a veranschaulicht, in welcher ein Rotor 10 ohne Schränkung der Magnete und Magnettaschen gezeigt ist. Permanentmagnetmaschinen können eine nicht gewünschte Drehmomentwelligkeit erzeugen, die zu ungewollten Vibrationen und Geräuschen führen kann. Herkömmlicherweise werden die Magnete im Rotor daher abgeschrägt, um die Drehmomentwelligkeit zu verringern, zum Beispiel indem die Magnete mit einem axialen Winkel relativ zueinander platziert werden und die Magnete schrittweise gedreht werden. Dies wird auch als Schränkung oder Schrägung bezeichnet, wobei die Schränkung eingesetzt wird, um Oberwellen, Rastmomente, sogenanntes Torque-Ripple und Geräusche zu reduzieren. Dabei veranschaulicht Fig. 24b einen Rotor 10 mit kontinuierlicher Schrägung, während Fig. 24c einen Rotor 10 mit schrittweiser Schränkung veranschaulicht.

Fig. 25 und 26 zeigen ein Blechpaket 12, welches aus den genannten, mit 76a-c bezeichneten Teilblechpaketen zusammengebaut ist.

Insgesamt ist aus Fig. 25 und 26 erkennbar, dass die innenliegenden Endscheiben 34 und 36 die Langlöcher 74 aufweisen, welche trotz des Umstands, dass die Teilblechpakete 76a-c geschränkt sind, sich teilweise gegenseitig überlappen, wodurch die Magnettaschen 20 über die Langlöcher 74 fluidisch miteinander verbunden sind. Dabei ist in Fig. 26 ein Schränkungswinkel der Schränkung mit α bezeichnet.

## Patentansprüche

1. Rotor (10) für eine elektrische Maschine, mit
wenigstens einem Blechpaket (12), welches eine Mehrzahl von in axialer Richtung (18) des Rotors (10) aufeinanderfolgend angeordneten Magnettaschen (20) aufweist, in welchen jeweilige Magnete (22) aufgenommen sind, die mittels einer ausgehärteten Vergussmasse (68) in den Magnettaschen (20) fixiert sind, wobei
die Magnettaschen (20) über wenigstens ein in dem Blechpaket (12) ausgebildetes Verteilersystem (24) fluidisch miteinander verbunden sind, welches je Magnettasche (20) wenigstens einen fluidisch mit der jeweiligen Magnettasche (20) verbundenen Füllkanal (26) aufweist, wobei
das Verteilersystem (24) wenigstens einen den Füllkanälen (26) gemeinsamen und fluidisch mit den Füllkanälen (26) verbundenen Verteilerkanal (28) aufweist, und wobei
sich die ausgehärtete Vergussmasse (68) durchgängig von Magnettasche (20) zu Magnettasche (20) durch das Verteilersystem (24) hindurcherstreckt, wobei
ein erster Teil (44) der jeweilige Magnettasche (20) durch ein erstes Einzelblech (14) des Blechpakets (12) und ein sich in axialer Richtung (18) des Rotors (10) direkt an den ersten Teil (44) anschließender zweiter Teil (46) der jeweiligen Magnettasche (20) durch ein sich in axialer Richtung (18) des Rotors (10) direkt an das erste Einzelblech (14) anschließendes zweites Einzelblech (16) des Blechpakets (12) gebildet ist,
sich die jeweiligen Teile (44, 46) in ihren Formen und/oder Innenumfängen voneinander unterscheiden und dadurch wenigstens eine Hinterschneidung (49) der jeweiligen Magnettasche (20) bilden, **dadurch gekennzeichnet, dass**
die Einzelbleche (14, 16) durch gleiche Blechzuschnitte gebildet und in Umfangsrichtung des Rotors (10) relativ zueinander verdreht angeordnet sind, und
die jeweilige Magnettasche (20) wenigstens eine sich in radialer Richtung (30) des Rotors (10) erstreckende Ausbuchtung (48) aufweist.

2. Rotor (10) nach Anspruch 1,
**dadurch gekennzeichnet, dass**
wenigstens eine Endscheibe (34, 36) vorgesehen ist, welche sich in axialer Richtung (18) des Rotors (10) an das Blechpaket (12) anschließt.

3. Rotor (10) nach Anspruch 2,
**dadurch gekennzeichnet, dass**
die Endscheibe (34, 36) wenigstens eine fluidisch mit dem Verteilersystem (24) verbundene Einfüllöffnung (38) aufweist, über welche die Vergussmasse (68) in ihrem flüssigen Zustand in das Verteilersystem (24) einfüllbar ist.

4. Rotor (10) nach Anspruch 3,
**dadurch gekennzeichnet, dass**
die Endscheibe (34, 36) wenigstens eine fluidisch mit dem Verteilersystem (24) verbundene Entlüftungsöffnung (40) zum Entlüften des Verteilersystems (24) beim Einfüllen der Vergussmasse (68) in das Verteilersystem (24) aufweist.

5. Rotor (10) nach Anspruch 3 oder 4,
**dadurch gekennzeichnet, dass**
eine zweite Endscheibe (34, 36) vorgesehen ist, die sich auf einer der ersten Endscheibe (34, 36) in axialer Richtung (18) abgewandten Seite des Blechpakets (12) an dieses in axialer Richtung (18) anschließt, wobei die zweite Endscheibe (34, 36) wenigstens eine fluidisch mit dem Verteilersystem (24) verbundene Entlüftungsöffnung (40) zum Entlüften des Verteilersystems (24) beim Einfüllen der Vergussmasse (68) in das Verteilersystem (24) aufweist.

6. Rotor (10) nach einem der vorhergehenden Ansprüche,
**dadurch gekennzeichnet, dass**
die Magnettaschen (20) und die Magnete (22) geschränkt sind.

7. Rotor (10) nach einem der vorhergehenden Ansprüche,
**dadurch gekennzeichnet, dass**
die Magnettaschen (20) eine erste Taschengruppe (54) bilden, wobei das Blechpaket (12) wenigstens eine in Umfangsrichtung des Blechpakets (12) neben der ersten Taschengruppe (54) angeordnete zweite Taschengruppe (56) aufweist, welche eine Mehrzahl von in axialer Richtung (18) des Rotors (10) aufeinanderfolgend angeordneten zweite Magnettaschen (58) umfasst, in welchen jeweilige zweite Magnete (22) aufgenommen sind, die mittels der ausgehärteten Vergussmasse (68) in den zweiten Magnettaschen (58) fixiert sind, wobei die zweiten Magnettaschen (58) über das Verteilersystem (24) fluidisch miteinander verbunden sind, welches je zweiter Magnettasche (58) wenigstens einen fluidisch mit der jeweiligen zweiten Magnettasche (58) verbundenen zweiten Füllkanal (60) und den wenigstens einen, den ersten Füllkanälen (36) und den zweiten Füllkanälen (60) gemeinsamen, fluidisch mit den ersten Füllkanälen (26) und fluidisch mit den zweiten Füllkanälen (60) verbundenen Verteilerkanal (28) aufweist, und wobei sich die ausgehärtete Vergussmasse (68) durchgängig von Magnettasche (20, 58) zu Magnettasche (20, 58) der jeweiligen Taschengruppen (54, 56) durch das Verteilersystem (24) hindurcherstreckt.

8. Verfahren zum Herstellen eines Rotors (10) nach einem der vorstehenden Ansprüche für eine elektrische Maschine, mit den Schritten:
- Bereitstellen wenigstens eines Blechpakets (12), welches eine Mehrzahl von in axialer Richtung (18) des Rotors (10) aufeinanderfolgend angeordneten Magnettaschen (20) aufweist, wobei
ein erster Teil (44) der jeweilige Magnettasche (20) durch ein erstes Einzelblech (14) des Blechpakets (12) und ein sich in axialer Richtung (18) des Rotors (10) direkt an den ersten Teil (44) anschließender zweiter Teil (46) der jeweiligen Magnettasche (20) durch ein sich in axialer Richtung (18) des Rotors (10) direkt an das erste Einzelblech (14) anschließendes zweites Einzelblech (16) des Blechpakets (12) gebildet ist, sich die jeweiligen Teile (44, 46) in ihren Formen und/oder Innenumfängen voneinander unterscheiden und dadurch wenigstens eine Hinterschneidung (49) der jeweiligen Magnettasche (20) bilden,
die Einzelbleche (14, 16) durch gleiche Blechzuschnitte gebildet und in Umfangsrichtung des Rotors (10) relativ zueinander verdreht angeordnet sind, und
die jeweilige Magnettasche (20) wenigstens eine sich in radialer Richtung (30) des Rotors (10) erstreckende Ausbuchtung (48) aufweist;
- Anordnen wenigstens eines Magneten (22) in der jeweilige Magnettasche (20); und
- Einbringen einer Vergussmasse (68) in die Magnettaschen (20), wodurch die Magnete (22) in den Magnettaschen (20) fixiert werden,
- Bilden wenigstens eines sich in dem Blechpaket (12) erstreckenden Verteilersystems (24), welches je Magnettasche (20) wenigstens einen fluidisch mit der jeweiligen Magnettasche (20) verbundenen Füllkanal (26) aufweist, wobei das Verteilersystem (24) wenigstens einen den Füllkanälen (26) gemeinsamen und fluidisch mit den Füllkanälen (26) verbundenen Verteilerkanal (28) aufweist;
- fluidisches Verbinden der Magnettaschen (20) über das Verteilersystem (24); und
- Einbringen der flüssigen Vergussmasse (68) in das Verteilersystem (24), indem die flüssige Vergussmasse (68) in den Verteilerkanal (28) eingefüllt wird und durchgängig von dem Verteilerkanal (28) in die jeweiligen Füllkanäle (26) und von den Füllkanälen (26) in die jeweiligen fluidisch mit dem Verteilersystem (24) verbundenen Magnettaschen (20) strömt.

9. Verfahren nach Anspruch 8,
**dadurch gekennzeichnet, dass**
die flüssige Vergussmasse (68) in vertikaler Richtung nach oben oder nach unten in den Verteilerkanal (28) eingefüllt wird.

## Claims

1. Rotor (10) for an electrical machine, having at least one laminated core (12) which has a multiplicity of magnet pockets (20) arranged in succession in an axial direction (18) of the rotor (10), in which magnet pockets there are received respective magnets (22) which are fixed in the magnet pockets (20) by means of a cured potting compound (68), wherein the magnet pockets (20) are fluidically connected to one another via at least one distributor system (24) which is formed in the laminated core (12) and which has, for each magnet pocket (20), at least one filling channel (26) fluidically connected to the respective magnet pocket (20), wherein the distributor system (24) has at least one distributor channel (28) which is common to the filling channels (26) and which is fluidically connected to the filling channels (26), and wherein the cured potting compound (68) extends continuously through the distributor system (24) from magnet pocket (20) to magnet pocket (20), wherein
a first part (44) of the respective magnet pocket (20) is formed by a first individual lamination (14) of the laminated core (12), and a second part (46), which directly adjoins the first part (44) in the axial direction (18) of the rotor (10), of the respective magnet pocket (20) is formed by a second individual lamination (16), which directly adjoins the first individual lamination (14) in the axial direction (18) of the rotor (10), of the laminated core (12),
the respective parts (44, 46) differ from one another in terms of their shapes and/or inner circumferences and thereby form at least one undercut (49) of the respective magnet pocket (20), **characterized in that** the individual laminations (14, 16) are formed by identical lamination blanks and are arranged so as to be rotationally staggered with respect to one another in a circumferential direction of the rotor (10), and
the respective magnet pocket (20) has at least one protuberance (48) extending in a radial direction (30) of the rotor (10).

2. Rotor (10) according to Claim 1,
**characterized in that**
at least one end plate (34, 36) is provided, which adjoins the laminated core (12) in the axial direction (18) of the rotor (10).

3. Rotor (10) according to Claim 2,
**characterized in that**
the end plate (34, 36) has at least one filling opening (38) which is fluidically connected to the distributor system (24) and via which the potting compound (68) can be filled in its liquid state into the distributor system (24) .

4. Rotor (10) according to Claim 3,
**characterized in that**
the end plate (34, 36) has at least one ventilation opening (40) which is fluidically connected to the distributor system (24) and which serves for the ventilation of the distributor system (24) as the potting compound (68) is filled into the distributor system (24).

5. Rotor (10) according to Claim 3 or 4,
**characterized in that**
a second end plate (34, 36) is provided, which adjoins the laminated core (12) in the axial direction (18) on a side of said laminated core which is averted from the first end plate (34, 36) in the axial direction (18), wherein the second end plate (34, 36) has at least one ventilation opening (40) which is fluidically connected to the distributor system (24) and which serves for the ventilation of the distributor system (24) as the potting compound (68) is filled into the distributor system (24).

6. Rotor (10) according to one of the preceding claims,
**characterized in that**
the magnet pockets (20) and the magnets (22) are offset.

7. Rotor (10) according to one of the preceding claims,
**characterized in that**
the magnet pockets (20) form a first pocket group (54), wherein the laminated core (12) has at least one second pocket group (56) which is arranged adjacent to the first pocket group (54) in the circumferential direction of the laminated core (12) and which comprises a multiplicity of second magnet pockets (58) arranged in succession in the axial direction (18) of the rotor (10), in which second magnet pockets there are received respective second magnets (22) which are fixed in the second magnet pockets (58) by means of the cured potting compound (68), wherein the second magnet pockets (58) are fluidically connected to one another via the distributor system (24), which, for each second magnet pocket (58), has at least one second filling channel (60) fluidically connected to the respective second magnet pocket (58) and has the at least one distributor channel (28) which is common to the first filling channels (36) and the second filling channels (60) and which is fluidically connected to the first filling channels (26) and fluidically connected to the second filling channels (60), and wherein the cured potting compound (68) extends continuously through the distributor system (24) from magnet pocket (20, 58) to magnet pocket (20, 58) of the respective pocket groups (54, 56) .

8. Method for producing a rotor (10) according to one of the preceding claims for an electrical machine, with the steps of:
- providing at least one laminated core (12) which has a multiplicity of magnet pockets (20) arranged in succession in an axial direction (18) of the rotor (10), wherein
a first part (44) of the respective magnet pocket (20) is formed by a first individual lamination (14) of the laminated core (12), and a second part (46), which directly adjoins the first part (44) in the axial direction (18) of the rotor (10), of the respective magnet pocket (20) is formed by a second individual lamination (16), which directly adjoins the first individual lamination (14) in the axial direction (18) of the rotor (10), of the laminated core (12);
the respective parts (44, 46) differ from one another in terms of their shapes and/or inner circumferences and thereby form at least one undercut (49) of the respective magnet pocket (20),
the individual laminations (14, 16) are formed by identical lamination blanks and are arranged so as to be rotationally staggered with respect to one another in a circumferential direction of the rotor (10), and the respective magnet pocket (20) has at least one protuberance (48) extending in a radial direction (30) of the rotor (10);
- arranging at least one magnet (22) in the respective magnet pocket (20); and
- introducing a potting compound (68) into the magnet pockets (20) whereby the magnets (22) are fixed in the magnet pockets (20),
- forming at least one distributor system (24) which extends in the laminated core (12) and which has, for each magnet pocket (20), at least one filling channel (26) fluidically connected to the respective magnet pocket (20), wherein the distributor system (24) has at least one distributor channel (28) which is common to the filling channels (26) and which is fluidically connected to the filling channels (26);
- fluidically connecting the magnet pockets (20) via the distributor system (24); and
- introducing the liquid potting compound (68) into the distributor system (24) by virtue of the liquid potting compound (68) being filled into the distributor channel (28) and flowing continuously from the distributor channel (28) into the respective filling channels (26) and from the filling channels (26) into the respective magnet pockets (20) which are fluidically connected to the distributor system (24).

9. Method according to Claim 8,
**characterized in that**
the liquid potting compound (68) is filled vertically upwards or downwards into the distributor channel (28).

## Revendications

1. Rotor (10) pour une machine électrique, comprenant au moins un noyau feuilleté (12), lequel présente une pluralité de logements d'aimants (20) agencés les uns à la suite des autres dans la direction axiale (18) du rotor (10), logements dans lesquels des aimants (22) respectifs sont reçus, lesquels aimants sont fixés dans les logements d'aimants (20) au moyen d'une masse de coulage (68) durcie, dans lequel
les logements d'aimants (20) sont reliés fluidiquement les uns aux autres par le biais d'au moins un système de distribution (24) réalisé dans le noyau feuilleté (12), lequel système présente, pour chaque logement d'aimant (20), au moins un canal de remplissage (26) relié fluidiquement au logement d'aimant (20) respectif, dans lequel
le système de distribution (24) présente au moins un canal de distribution (28) commun aux canaux de remplissage (26) et relié fluidiquement aux canaux de remplissage (26), et dans lequel
la masse de coulage (68) durcie s'étend de manière continue de logement d'aimant (20) à logement d'aimant (20) à travers le système de distribution (24), dans lequel
une première partie (44) du logement d'aimant (20) respectif est formée par une première tôle individuelle (14) du noyau feuilleté (12) et une deuxième partie (46) du logement d'aimant (20) respectif, laquelle deuxième partie est directement adjacente à la première partie (44) dans la direction axiale (18) du rotor (10), est formée par une deuxième tôle individuelle (16) du noyau feuilleté (12), laquelle deuxième tôle individuelle est directement adjacente à la première tôle individuelle (14) dans la direction axiale (18) du rotor (10),
les parties (44, 46) respectives diffèrent l'une de l'autre de par leurs formes et/ou leurs périphéries intérieures et forment ainsi au moins une contre-dépouille (49) du logement d'aimant (20) respectif, **caractérisé en ce que**
les tôles individuelles (14, 16) sont formées par des flans de tôle identiques et sont agencées de manière tournée les unes par rapport aux autres dans la direction périphérique du rotor (10), et
le logement d'aimant (20) respectif présente au moins un renflement (48) s'étendant dans la direction radiale (30) du rotor (10).

2. Rotor (10) selon la revendication 1,
**caractérisé en ce**
**qu'**au moins une plaque d'extrémité (34, 36) est prévue, laquelle est adjacente au noyau feuilleté (12) dans la direction axiale (18) du rotor (10).

3. Rotor (10) selon la revendication 2,
**caractérisé en ce que**
la plaque d'extrémité (34, 36) présente au moins une ouverture de remplissage (38) reliée fluidiquement au système de distribution (24), ouverture de remplissage par le biais de laquelle la masse de coulage (68) peut être introduite dans son état liquide dans le système de distribution (24).

4. Rotor (10) selon la revendication 3,
**caractérisé en ce que**
la plaque d'extrémité (34, 36) présente au moins une ouverture de ventilation (40) reliée fluidiquement au système de distribution (24) pour la ventilation du système de distribution (24) lors de l'introduction de la masse de coulage (68) dans le système de distribution (24) .

5. Rotor (10) selon la revendication 3 ou 4,
**caractérisé en ce**
**qu'**une deuxième plaque d'extrémité (34, 36) est prévue, laquelle, sur un côté du noyau feuilleté (12) opposé à la première plaque d'extrémité (34, 36) dans la direction axiale (18), est adjacente à celui-ci dans la direction axiale (18), la deuxième plaque d'extrémité (34, 36) présentant au moins une ouverture de ventilation (40) reliée fluidiquement au système de distribution (24) pour la ventilation du système de distribution (24) lors de l'introduction de la masse de coulage (68) dans le système de distribution (24).

6. Rotor (10) selon l'une des revendications précédentes,
**caractérisé en ce que**
les logements d'aimants (20) et les aimants (22) sont décalés.

7. Rotor (10) selon l'une des revendications précédentes,
**caractérisé en ce que**
les logements d'aimants (20) forment un premier groupe de logements (54), le noyau feuilleté (12) présentant au moins un deuxième groupe de logements (56) agencé près du premier groupe de logements (54) dans la direction périphérique du noyau feuilleté (12), lequel deuxième groupe de logements comporte une pluralité de deuxièmes logements d'aimants (58) agencés les uns à la suite des autres dans la direction axiale (18) du rotor (10), deuxièmes logements dans lesquels des deuxièmes aimants (22) respectifs sont reçus, lesquels aimants sont fixés dans les deuxièmes logements d'aimants (58) au moyen d'une masse de coulage (68) durcie, les deuxièmes logements d'aimants (58) étant reliés fluidiquement les uns aux autres par le biais du système de distribution (24), lequel système présente, pour chaque deuxième logement d'aimant (58), au moins un deuxième canal de remplissage (60) relié fluidiquement au deuxième logement d'aimant (58) respectif et l'au moins un canal de distribution (28) commun aux premiers canaux de remplissage (36) et aux deuxièmes canaux de remplissage (60) et relié fluidiquement aux premiers canaux de remplissage (26) et fluidiquement aux deuxièmes canaux de remplissage (60), et la masse de coulage (68) durcie s'étendant de manière continue de logement d'aimant (20, 58) à logement d'aimant (20, 58) du groupe de logements (54, 56) respectif à travers le système de distribution (24) .

8. Procédé de fabrication d'un rotor (10) selon l'une des revendications précédentes pour une machine électrique, comprenant les étapes suivantes :
- fourniture d'au moins un noyau feuilleté (12), lequel présente une pluralité de logements d'aimants (20) agencés les uns à la suite des autres dans la direction axiale (18) du rotor (10), dans lequel
une première partie (44) du logement d'aimant (20) respectif est formée par une première tôle individuelle (14) du noyau feuilleté (12) et une deuxième partie (46) du logement d'aimant (20) respectif, laquelle deuxième partie est directement adjacente à la première partie (44) dans la direction axiale (18) du rotor (10), est formée par une deuxième tôle individuelle (16) du noyau feuilleté (12), laquelle deuxième tôle individuelle est directement adjacente à la première tôle individuelle (14) dans la direction axiale (18) du rotor (10), les parties (44, 46) respectives diffèrent l'une de l'autre de par leurs formes et/ou leurs périphéries intérieures et forment ainsi au moins une contre-dépouille (49) du logement d'aimant (20) respectif,
les tôles individuelles (14, 16) sont formées par des flans de tôle identiques et sont agencées de manière tournée les unes par rapport aux autres dans la direction périphérique du rotor (10), et
le logement d'aimant (20) respectif présente au moins un renflement (48) s'étendant dans la direction radiale (30) du rotor (10) ;
- agencement d'au moins un aimant (22) dans le logement d'aimant (20) respectif ; et
- introduction d'une masse de coulage (68) dans les logements d'aimants (20), de sorte que les aimants (22) soient fixés dans les logements d'aimants (20),
- formation d'au moins un système de distribution (24) s'étendant dans le noyau feuilleté (12), lequel système présente, pour chaque logement d'aimant (20), au moins un canal de remplissage (26) relié fluidiquement au logement d'aimant (20) respectif, dans lequel le système de distribution (24) présente au moins un canal de distribution (28) commun aux canaux de remplissage (26) et relié fluidiquement aux canaux de remplissage (26) ;
- liaison fluidique des logements d'aimants (20) par le biais du système de distribution (24) ; et
- introduction de la masse de coulage (68) liquide dans le système de distribution (24), par le fait que la masse de coulage (68) liquide est introduite dans le canal de distribution (28) et s'écoule de manière continue à partir du canal de distribution (28) dans les canaux de remplissage (26) respectifs et à partir des canaux de remplissage (26) dans les logements d'aimants (20) respectifs reliés fluidiquement au système de distribution (24).

9. Procédé selon la revendication 8,
**caractérisé en ce que**
la masse de coulage (68) liquide est introduite dans le canal de distribution (28) vers le haut ou vers le bas dans la direction verticale.
